# EUROPÄISCHE PATENTSCHRIFT

(11) **EP 4 168 278 B1**
(45) Veröffentlichungstag und Bekanntmachung des Hinweises auf die Patenterteilung: **07.08.2024**
(21) Anmeldenummer: 21739973.2
(22) Anmeldetag: 27.05.2021
(51) Int. Cl.: B60R 22/46

(54) **GURTAUFROLLER**
BELT RETRACTOR
ENROULEUR DE CEINTURE

(30) Priorität: 18.06.2020 DE 102020207535
(43) Veröffentlichungstag der Anmeldung: 26.04.2023
(73) Patentinhaber: Autoliv Development AB, 447 83 Vårgårda (SE)
(72) Erfinder: JABUSCH, Ronald, 25336 Elmshorn (DE)
(74) Vertreter: Müller Verweyen
(86) Internationale Anmeldenummer: PCT/EP2021/064130
(87) Internationale Veröffentlichungsnummer: WO 2021/254756

(56) Entgegenhaltungen:
- WO-A2-03/099619
- DE-A1- 102013 208 148
- DE-A1- 102018 219 040
- DE-A1- 19 927 731
- DE-B3- 102005 016 822

## Beschreibung

Die vorliegende Erfindung betrifft einen Gurtaufroller mit den Merkmalen des Oberbegriffs von Anspruch 1.

Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung des Gurtaufrollers an einer Sitzstruktur oder an einer Fahrzeugstruktur und ist dafür aus einem entsprechend dicken Stahlblech hergestellt, welches zu einem U-förmigen Rahmen gebogen ist.

Fahrzeugsitze mit integrierten Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden müssen. Die Gurtaufroller selbst weisen alle Grundbauteile eines Standardgurtaufrollers auf und werden nur mit verschiedenen, speziell für den Einbau in die Rückenlehne vorgesehenen Zusatzbaugruppen, wie z.B. einem sich selbst ausrichtenden Trägheitssensor versehen.

Der Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen. Die Sitzstruktur ist zur Verbesserung des Sitzkomforts mit Federn und einer Polsterung versehen und dient außerdem zur Befestigung weiterer Bauteile wie z.B. verschiedener Sitzverstellmechanismen, einschließlich der zugehörigen Elektromotoren und weiterer Bauteile wie Heizeinrichtungen, Sensoren, Displays, Kopfstützen und dergleichen.

In modernen Fahrzeugen mit autonomen Fahrsystemen wird zunehmend eine vergrößerte Verstellbarkeit der Fahrzeugsitze in verschiedene Ausrichtungen und Stellungen in der Fahrgastzelle gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen mit sämtlichen Bestandteilen also Gurtaufroller und Gurtschloss am Fahrzeugsitz befestigt werden muss, wie dies z.B. auch schon bei den Vordersitzen von Cabriolets der Fall ist.

Ferner werden Gurtaufroller in modernen Sicherheitsgurteinrichtungen mit Elektromotoren versehen, welche die Gurtwelle bei einer Aktivierung zum Beispiel zu einer reversiblen Gurtstraffung in Aufwickelrichtung antreiben. Der Elektromotor ist dabei ebenfalls an dem Rahmen befestigt und seitlich der Gurtwelle mit einer parallel zu der Drehachse der Gurtwelle ausgerichteten Antriebswelle angeordnet. Ferner ist es bekannt, zwischen der Gurtwelle und dem Elektromotor ein Getriebe vorzusehen, durch welches die Drehzahl des Elektromotors in eine vorbestimmte Drehzahl der Gurtwelle übersetzt wird. Durch die Verwendung des Getriebes wird es außerdem ermöglicht, einen möglichst kleinbauenden Elektromotor mit einer hohen Drehzahl zu verwenden und dennoch ein vergleichsweises hohes Drehmoment auf die Gurtwelle auszuüben. Insgesamt ergibt sich dadurch aber trotz der durch das Getriebe ermöglichten Verwendung des kleinbauenden Elektromotors ein Gurtaufroller mit einem vergrößerten Bauraumbedarf. Ein solcher Gurtaufroller ist z.B. aus der Druckschrift WO 03/0 99 619 A2 bekannt und entspricht dem Oberbegriff des Anspruchs 1.

Sofern die Gurtwelle mit unterschiedlichen Drehzahlen und Drehmomenten angetrieben werden soll, müssen weitere Getriebestufen vorgesehen werden, welche den Bauraumbedarf weiter vergrößern. Ein solcher Gurtaufroller ist z.B. aus der Druckschrift DE 199 27 731 C2 bekannt.

Ferner ist es bekannt, in den Gurtaufrollern Kraftbegrenzungseinheiten vorzusehen, welche eine kraftbegrenzte Vorverlagerung des Insassen zur Reduzierung der Insassenbelastung ermöglichen, bevor dieser von den Airbags aufgefangen wird. Als Kraftbegrenzungseinheiten haben sich insbesondere Torsionsstäbe aus Stahl bewährt, welche mit einem Ende drehfest mit einem fahrzeugfest blockierbaren Teil und mit dem anderen Ende mit der Gurtwelle verbunden sind. Diese Torsionsstäbe werden, während ihrer Aktivierung plastisch um ihre Längsachse verdrillt und vernichten dadurch bewusst Energie. Dabei wird das Kraftbegrenzungsniveau bzw. die Kraftbegrenzungscharakteristik durch den plastischen Verformungswiderstand des Torsionsstabes bestimmt, welcher wiederum abhängig von dem Werkstoff und dem Durchmesser des Torsionsstabes ist. Der Torsionsstab liefert ein konstantes Kraftbegrenzungsniveau und wird erst bei einem Überschreiten seiner plastischen Verformungsgrenze aktiviert. Sofern die Zugkraft im Gurt z.B. bei der Rückhaltung von kleineren Kindern nicht groß genug ist, und der plastische Verformungswiderstand nicht überschritten wird, erfährt der Insasse, also in diesem Fall das Kind auch keine kraftbegrenzte Vorwärtsverlagerung. Der Insasse nutzt in diesem Fall den zur Rückhaltung zur Verfügung stehenden Vorverlagerungsweg in der Fahrgastzelle nicht aus und wird stattdessen mit einer höheren Insassenbelastung zurückgehalten als dies eigentlich unter einer vollständigen Ausnutzung des zur Verfügung stehenden Vorverlagerungsweges möglich wäre.

Aus der Patentschrift DE 10 2005 016 822 B3 ist ferner eine frequenzgesteuerte Kraftbegrenzungseinheit bekannt, welche einen kraftbegrenzten Gurtbandauszug durch ein in Schwingung zu versetzendes Massesystem ermöglicht. Der Vorteil dieser Kraftbegrenzungseinheit ist darin zu sehen, dass der kraftbegrenzte Gurtbandauszug unabhängig von den in dem Gurtband wirkenden Zugkräften aktiviert wird, und dass der zur Reduzierung der Insassenbelastung ausgenutzte Vorverlagerungsweg auch unabhängig von der Schwere des Unfalles ist. Damit wird für den Insassen im Idealfall immer der maximale Vorverlagerungsweg ausgenutzt und die Insassenbelastung maximal reduziert. Die Kraftbegrenzungscharakteristik dieser Kraftbegrenzungseinheit ist durch die Auslegung des in Schwingung zu versetzenden Massesystems definiert.

Sowohl die Kraftbegrenzungseinheit mit dem Torsionsstab als auch die frequenzgesteuerte Kraftbegrenzungseinheit werden durch die in dem Gurt wirkende Zugkraft aktiviert und weisen eine allein durch ihre Auslegung definierte, unveränderbare Kraftbegrenzungscharakteristik auf.

Vor diesem Hintergrund liegt der Erfindung die Aufgabe zugrunden, einen Gurtaufroller mit einer Kraftbegrenzungseinheit bereitzustellen, welche einen verbesserten, gesteuerten Gurtbandauszug zur Reduzierung der Insassenbelastung ermöglichen soll.

Erfindungsgemäß wird zur Lösung der Aufgabe ein Gurtaufroller mit den Merkmalen von Anspruch 1 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass die Kraftbegrenzungseinheit in dem Gurtaufroller einen Elektromotor und eine erste Blockiereinrichtung aufweist, und die erste Blockiereinrichtung dazu eingerichtet ist, durch die Aktivierung des Elektromotors eine Drehbewegung der Gurtwelle in Auszugsrichtung in einer sich wiederholenden Abfolge freizugeben und wieder zu blockieren.

Der Vorteil der vorgeschlagenen Lösung ist darin zu sehen, dass die Kraftbegrenzungseinheit des Gurtaufrollers einen steuerbaren Elektromotor aufweist, und dass die erste Blockiereinrichtung bewusst dazu eingerichtet ist, ausgelöst durch die Aktivierung des Elektromotors eine kraftbegrenzte Gurtbandauszugsbewegung zu ermöglichen, indem sie die Drehbewegung der Gurtwelle in Auszugsrichtung in einer sich wiederholenden Abfolge freigibt und wieder blockiert. Damit können der Beginn und das Ende der Gurtbandauszugsbewegung unabhängig von den wirkenden Zugkräften in dem Gurt gesteuert werden. Dabei ist die Drehbewegung der Gurtwelle vor der Aktivierung des Elektromotors durch die in der Blockierstellung angeordnete Blockiereinrichtung blockiert und wird erst durch die Aktivierung des Elektromotors ermöglicht. Der Elektromotor kann hier auch als Auslöser der kraftbegrenzten Gurtbandauszugsbewegung angesehen werden. Durch die kurzzeitige Freigabe der ersten Blockiereinrichtung wird das Gurtband unter den von dem Insassen bei der Rückhaltung im Unfall ausgeübten Zugkräften für eine sehr kurze Zeitspanne bis zu der nächsten Blockierung der ersten Blockiereinrichtung ausgezogen, und der Insasse verlagert sich mit einer dadurch reduzierten Insassenbelastung nach vorne, bevor die Vorwärtsverlagerung durch die Blockierung wieder gestoppt wird, und sich der Vorgang wiederholt. Die erste Blockiereinrichtung ist dabei so ausgelegt, dass die Zeitabstände zwischen der Entriegelung und der anschließenden Blockierung zwischen 0,01 bis 0,05 ms liegen, so dass der Auszug des Gurtbandes schrittweise in sehr kurzen, sich wiederholenden Auszugsbewegungen erfolgt, welche für den Insassen aufgrund der sehr kurzen Zeitspannen aber nicht wahrnehmbar sind.

Erfindungsgemäß wird vorgeschlagen, dass die erste Blockiereinrichtung in Abhängigkeit von einer Aktivierung des Elektromotors aus einer die Gurtwelle blockierenden Stellung in eine die Gurtwelle freigebende Stellung bewegbar ist, und die erste Blockiereinrichtung durch die ermöglichte Drehbewegung der Gurtwelle in Auszugsrichtung nach einem vorbestimmten Drehwinkel der Gurtwelle selbsttätig wieder blockiert. Der Elektromotor wird gemäß der vorgeschlagenen Weiterentwicklung dazu genutzt, den Entriegelungsvorgang der ersten Blockiereinrichtung auszulösen und damit die bezweckte Gurtbandauszugsbewegung durch eine dadurch freigegebene Gurtwelle zu ermöglichen. Die nachfolgende Auszugsbewegung kann z.B. durch die von dem Insassen auf das Gurtband ausgeübte Zugkraft bewirkt werden, der Elektromotor muss hier nicht mitwirken. Es ist aber nicht ausgeschlossen, dass der Elektrotor auch zur Beeinflussung der Auszugsbewegung aktiv genutzt wird. Da die erste Blockiereinrichtung weiter dazu eingerichtet ist, nach einem vorbestimmten Drehwinkel der Gurtwelle selbsttätig wieder zu blockieren, wird die Drehbewegung der Gurtwelle in Auszugsrichtung nachfolgend selbsttätig wieder gestoppt, bevor sie in einem sich wiederholenden Vorgang wieder freigegeben und blockiert wird.

Erfindungsgemäß wird die Auslösung des Entriegelungsvorganges der ersten Blockiereinrichtung besonders einfach und in einer kompakten Bauweise verwirklicht, indem ein durch den Elektromotor angetriebener Entriegelungsring vorgesehen ist, welcher eine Steuerkontur aufweist, und die erste Blockiereinrichtung durch wenigstens ein an der Steuerkontur anliegendes Blockierelement gebildet ist. Der Entriegelungsring steuert durch seine durch den Antrieb über den Elektromotor ausgelöste Bewegung aufgrund der Formgebung seiner Steuerkontur die Auslösung und den Verlauf der Bewegung bzw. die Bewegungsmöglichkeit des daran anliegenden Blockierelementes. Dabei ist die Steuerkontur so ausgebildet, dass sie durch ihre Formgebung das Blockierelement über bestimmte Abschnitte während der Bewegung in die Blockierposition drängt und in bestimmten Abschnitten bewusst wieder freigibt, so dass sich das Blockierelement während der Relativbewegung zu dem Entriegelungsring aus der Blockierposition in eine Freigabestellung und umgekehrt bewegen kann bzw. durch die Formgebung der Steuerkontur zu der Bewegung gezwungen wird.

Eine solche Formgebung der Steuerkontur kann z.B. dadurch verwirklicht sein, indem sie durch eine Rampenstruktur mit einer der Anzahl der Blockierelemente entsprechenden Anzahl von Rampen und zwischen den Rampen angeordneten Vertiefungen gebildet ist, an denen das Blockierelement in der blockierenden Stellung und der freigebenden Stellung wechselweise anliegt. Die Entriegelung und Blockierung des Blockierelementes erfolgt dabei durch eine Relativbewegung des oder der Blockierelemente zu der Steuerkontur, welche wiederum durch den Antrieb des Entriegelungsringes über den Elektromotor gegenüber den oder dem Blockierelement(en) ausgelöst und nachfolgend durch eine Kombination der Bewegung des Entriegelungsringes und des bzw. der Blockierelemente gebildet sein kann.

Weiter wird vorgeschlagen, dass ein Drehrichtungsumkehrgetriebe vorgesehen ist, welches über ein erstes Teil in einer Drehverbindung mit der Gurtwelle steht, und die erste Blockiereinrichtung zwischen dem ersten Teil des Drehrichtungsumkehrgetriebes und einem durch das Drehrichtungsumkehrgetriebe zu einer gegenüber der Drehrichtung der Gurtwelle entgegengesetzten Drehrichtung angetriebenen zweiten Teil des Drehrichtungsumkehrgetriebes angeordnet ist. Durch die vorgeschlagene Weiterentwicklung kann in jedem Fall sichergestellt werden, dass die Teile, welche über die erste Blockiereinrichtung zueinander blockiert werden, in jedem Fall eine Relativbewegung zueinander ausführen, welche wiederum zu der selbsttätigen Blockierung der ersten Blockiereinrichtung genutzt wird. Ferner wird diese Relativbewegung durch das Drehrichtungsumkehrgetriebe und die dadurch bewirkten unterschiedlichen Drehrichtungen der zueinander zu blockierenden Teile zusätzlich noch vergrößert. Aufgrund dieser vergrößerten Relativbewegung kann wiederum der Drehwinkel des ersten Teils und damit auch der Drehwinkel der Gurtwelle, nach dem die erste Blockiereinrichtung wieder blockiert, im Umkehrschluss verringert werden.

Dabei kann das Drehrichtungsumkehrgetriebe bevorzugt so ausgebildet sein, dass das zweite Teil gegenüber dem ersten Teil eine durch das Drehrichtungsumkehrgetriebe in eine höhere Drehzahl übersetzte Drehbewegung ausführt. Dadurch kann die zur Blockierung der ersten Blockiereinrichtung zur Verfügung stehende Relativdrehbewegung weiter erhöht und der Drehwinkel der Gurtwelle nach dem diese wieder blockiert wird verkürzt werden, da dadurch das zweite Teil eine gegenüber der Bewegung des ersten Teils vergrößerte Bewegung ausführt und damit den größeren Teil der Relativbewegung ausführt. Ferner kann das Drehrichtungsumkehrgetriebe dadurch so ausgelegt werden, dass es in seiner eigentlichen Funktionsrichtung zur Straffung des Gurtbandes als die Drehzahl des Elektromotors in eine niedrigere Drehzahl der Gurtwelle untersetzendes Getriebe ausgelegt werden kann. Ferner kann durch die Übersetzung der Drehbewegung insofern ein Vorteil erlangt werden, indem die erste Blockiereinrichtung mit vergleichsweise kleinen Motordrehmomenten verwirklicht werden kann.

Eine besonders kompakte Bauweise des Gurtaufrollers kann dadurch verwirklicht werden, indem das Drehrichtungsumkehrgetriebe durch ein Planetengetriebe gebildet ist, und die Umkehr der Drehrichtung in dem Drehrichtungsumkehrgetriebe durch einen über eine zweite Blockiereinrichtung gegenüber dem Rahmen des Gurtaufrollers blockierten Planetenträger des Planetengetriebes verwirklicht ist. Der Vorteil dieser Lösung ist darin zu sehen, dass Planetengetriebe grundsätzlich einen sehr kompakten Aufbau aufweisen und hohe Übersetzungsverhältnisse ermöglichen. Ferner kann das Planetengetriebe konstruktiv sehr einfach als Drehrichtungsumkehrgetriebe ausgebildet werden, indem ein Planetenträger gegenüber dem Rahmen des Gurtaufrollers blockiert wird. Damit kann das Planetengetriebe grundsätzlich ohne eine Blockierung des Planetenträger z.B. zur Verwirklichung einer weiteren Funktion wie z.B. einer reversiblen Vorstraffung ohne eine Drehrichtungsumkehr der Drehbewegung zu einer Übersetzung der Antriebsdrehbewegung genutzt werden.

Weiter wird vorgeschlagen, dass das erste Teil oder das zweite Teil des Drehrichtungsumkehrgetriebes eine Blockierkontur aufweisen, an welcher die erste Blockiereinrichtung in der blockierenden Stellung anliegt. Die Blockierkontur bildet hier eine formschlüssige Verbindung in Bezug zu der Drehrichtung der beiden Teile zueinander und verhindert die weitere Drehbewegung des zweiten Teils zu dem ersten Teil. Die Blockierkontur ist dabei so angeordnet, dass die erste Blockiereinrichtung daran während der Drehbewegung des ersten Teils oder auch der Gurtwelle in Auszugsrichtung des Gurtbandes selbsttätig zur Anlage gelangt und die weitere Drehbewegung blockiert.

Weiter wird vorgeschlagen, dass das erste Teil durch einen drehfest mit der Gurtwelle verbundenen, rohrförmigen, axialen Fortsatz gebildet ist, welcher das Gehäuse des Drehrichtungsumkehrgetriebes bildet. Das erste Teil bildet praktisch eine rohrförmige Verlängerung der Gurtwelle in Axialrichtung, welche einen Ansatz zur Blockierung der Gurtwelle bildet und gleichzeitig durch seine Form als Gehäuse für das Drehrichtungsumkehrgetriebe dient.

Dabei kann die Blockierkontur in diesem Fall bevorzugt durch in Umfangsrichtung gerichtete, an der Innenseite des ringförmigen Fortsatzes angeordnete Rampen gebildet sein, an denen die Blockierelemente in der blockierenden Stellung anliegen. Die vorgeschlagene Formgebung weist den Vorteil auf, dass die Rampen einerseits eine formschlüssige Mitnahme des ersten Teils ermöglichen, wenn sich die erste Blockiereinrichtung in der blockierenden Stellung befindet. Andererseits ermöglichen die Rampen aufgrund ihrer Schrägen ein selbsttätiges Verdrängen der Blockiereinrichtung aus der blockierenden Stellung in die freigebende Stellung, wenn die erste Blockiereinrichtung durch die Steuerkontur des Entriegelungsringes nicht mehr in Richtung der blockierenden Stellung gedrängt wird. Die Blockierkontur dient damit nicht nur allein der Blockierung der ersten Blockiereinrichtung, sondern zusätzlich auch zur Auslösung der Deblockierbewegung, wenn die erste Blockiereinrichtung freigegeben ist.

Weiter wird vorgeschlagen, dass der Entriegelungsring über eine Feder gegenüber der Gurtwelle federbelastet ist. Durch die vorgeschlagene Lösung wird der Entriegelungsring in einer federelastischen Verbindung zu der Gurtwelle gehalten und dreht sich dadurch mit der Gurtwelle mit, so dass er durch die Feder in einer Position zu der Gurtwelle gehalten ist, in welcher er die Blockiereinrichtung in der blockierenden Stellung drängt.

Weiter wird vorgeschlagen, dass die Gurtwelle durch eine sich rahmenfest abstützende Triebfeder in Aufwickelrichtung des Sicherheitsgurtes federbelastet ist, und die Federkraft der Triebfeder kleiner ist als die Federkraft der den Entriegelungsring belastenden Feder. Durch die vorgeschlagene Weiterentwicklung kann der Elektromotor zusätzlich zur Verwirklichung einer Komfortfunktion genutzt werden, indem er zusätzlich während des angelegten Sicherheitsgurtes parallel zu der Triebfeder auf die Gurtwelle einwirkt und dadurch die auf die Gurtwelle einwirkende Rückzugskraft entweder erhöht, z.B. für ein sportliches Fahrens, oder auch zu einer Verringerung der auf den Sicherheitsgurt wirkenden Rückzugskraft, so dass der Insasse den Sicherheitsgurt weniger wahrnimmt. Ferner kann dadurch auch ein Aufwickeln des Sicherheitsgurtes in die Parkposition nach dem Abschnallen realisiert werden.

Die Erfindung wird im Folgenden anhand bevorzugter Ausführungsformen unter Bezugnahme auf die beigefügten Figuren erläutert. Dabei zeigt
- Fig. 1: einen erfindungsgemäßen Gurtaufroller in zwei Darstellungen mit einem montierten und einem teilweise demontierten Rahmen, und
- Fig. 2: einen erfindungsgemäßen Gurtaufroller mit den einzelnen Baugruppen in einem demontierten Zustand, und
- Fig. 3: einen erfindungsgemäßen Gurtaufroller ohne Rahmen in einer Explosionsdarstellung, und
- Fig. 4: ein Planetengetriebe und eine Kraftbegrenzungseinheit des erfindungsgemäßen Gurtaufrollers ohne einen Elektromotor in einer Explosionsdarstellung, und
- Fig. 5: eine Schnittdarstellung des erfindungsgemäßen Gurtaufrollers, und
- Fig. 6: das aufgeschnittene Planetengetriebe mit der Kraftbegrenzungseinheit als Baugruppe, und
- Fig. 7: das Gehäuse des Getriebes mit der Baugruppe der Kraftbegrenzungseinheit in einer ersten Explosionsdarstellung, und
- Fig. 8: das Gehäuse des Getriebes mit der Baugruppe der Kraftbegrenzungseinheit in einer zweiten Explosionsdarstellung, und
- Fig. 9: eine vergrößerte Schnittdarstellung des Planetengetriebes mit der Kraftbegrenzungseinheit mit verschiedenen Schnittrichtungen, und
- Fig. 10: eine Schnittdarstellung der Fig. 9 in Schnittrichtung A-A mit einer geschlossenen, zwischen dem Gehäuse und dem Getriebe angeordneten Kupplung während des Aufwickelns in die Parkposition, und
- Fig. 11: eine Schnittdarstellung der Fig. 9 in die Schnittrichtungen B-B, C-C und D-D vor der Aktivierung der Kraftbegrenzungseinheit, und
- Fig. 12: eine Schnittdarstellung der Fig. 9 in die Schnittrichtungen B-B, C-C und D-D während der Aktivierung der Kraftbegrenzungseinheit in einer ersten Stellung, und
- Fig. 13: eine Schnittdarstellung der Fig. 9 in die Schnittrichtungen B-B, C-C und D-D während der Aktivierung der Kraftbegrenzungseinheit in einer zweiten Stellung, und
- Fig. 14: eine Schnittdarstellung der Fig. 9 in die Schnittrichtungen B-B, C-C und D-D während der Aktivierung eines Gurtwarners, und
- Fig. 15: das Antriebsrad mit einer Feder und zwei federbelasteten Klinken mit dem Entriegelungsring als Baugruppe gemäß einer zweiten Ausführungsform, und
- Fig. 16: das Antriebsrad mit dem Entriegelungsring aus der Fig. 15 in Explosionsdarstellung, und
- Fig. 17: eine Schnittdarstellung des zweiten Ausführungsbeispiels durch das Antriebsrad in Schnittrichtung D-D während des Aufwickelns in die Parkposition, und
- Fig. 18: eine Schnittdarstellung des Gurtaufroller mit einem Antriebsrad nach der Figur 15 in die Schnittrichtungen B-B, C-C und D-D in einer Anfangsphase der Aktivierung der reversiblen Gurtstraffung, und
- Fig. 19: eine Schnittdarstellung des Gurtaufroller mit einem Antriebsrad nach der Figur 15 in die Schnittrichtungen B-B, C-C und D-D in einer späteren Phase der Aktivierung der reversiblen Gurtstraffung, und
- Fig. 20: eine Schnittdarstellung des Gurtaufroller mit einem Antriebsrad nach der Figur 15 in die Schnittrichtungen B-B, C-C und D-D in einer Anfangsphase der Aktivierung der Kraftbegrenzungseinheit, und
- Fig. 21: eine Schnittdarstellung des Gurtaufroller mit einem Antriebsrad nach der Figur 15 in die Schnittrichtungen B-B, C-C und D-D in einer nachfolgenden Phase der Aktivierung der Kraftbegrenzungseinheit, und
- Fig. 22: eine Schnittdarstellung des Gurtaufrollers mit einem Antriebsrad nach der Fig. 15 in die Schnittrichtungen B-B, C-C und D-D während der Aktivierung eines Gurtwarners.

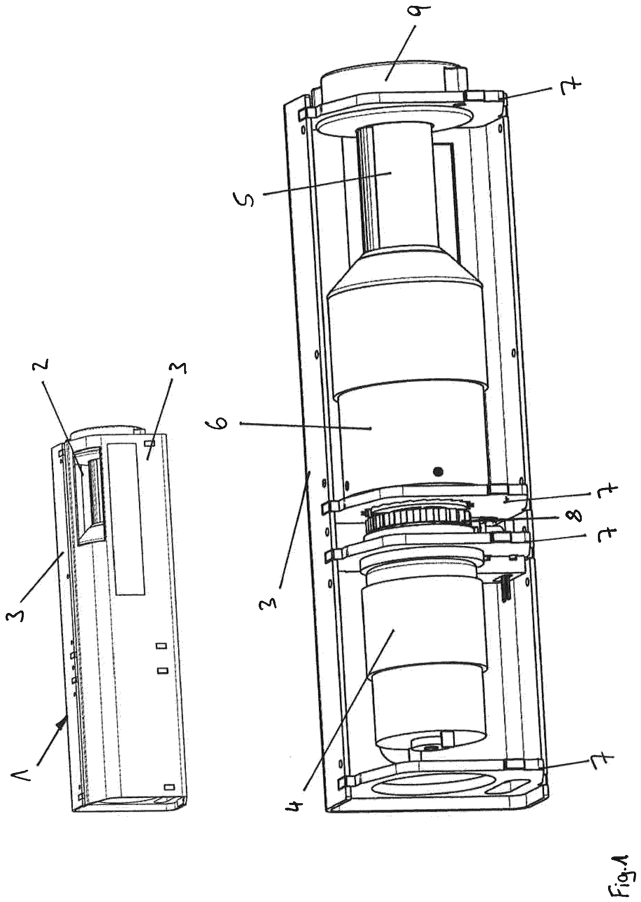

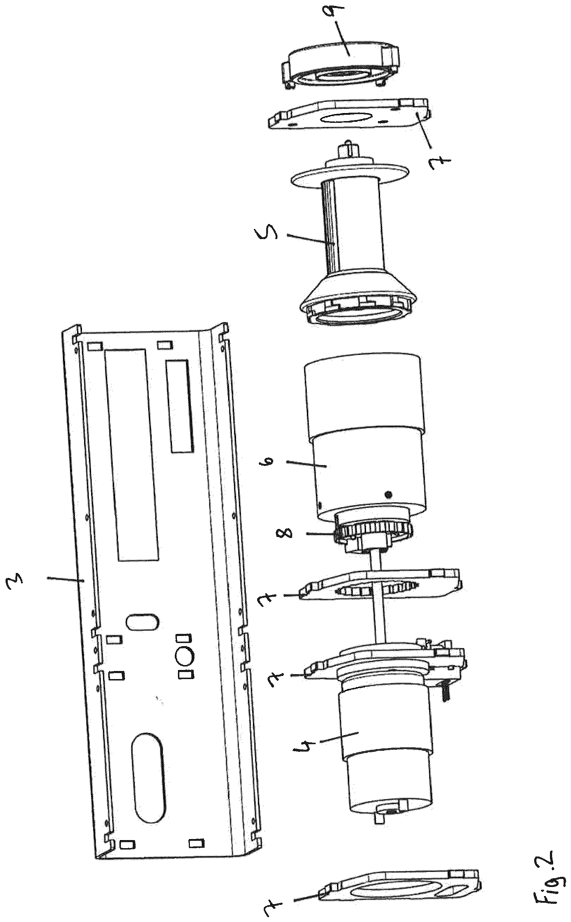

In den Figuren 1 und 2 ist ein erfindungsgemäßer Gurtaufroller zu erkennen, welcher einen länglichen, im Querschnitt, abgesehen von Rundungen und einigen Schrägen, im Grundaufbau rechteckigen, rohrförmigen Rahmen 1 aus zwei Gehäuseschalen 3 aufweist. Der Rahmen 1 weist einen Schlitz 2 auf, aus dem ein nicht dargestellter Sicherheitsgurt auf einen über den Sicherheitsgurt zurückgehaltenen Insassen in einem Fahrzeug herausgeführt ist. Damit die Baugruppen des Gurtaufrollers besser zu erkennen sind, wurde in der unteren Darstellung der Figur 1 und in der Figur 2 eine der Gehäuseschalen 3 weggelassen. Der Gurtaufroller ist in seiner länglichen Form speziell für eine Anordnung in einem Fahrzeugsitz ausgebildet, wobei der Gurtaufroller durch eine koaxiale Anordnung der nachfolgend noch beschriebenen Baugruppen im Querschnitt eine möglichst kleine Höhe und Breite aufweist, damit er auch in schmalen Hohlräumen des Fahrzeugsitzes angeordnet werden kann. Der Rahmen 1 ist durch mehrere Stege 7 unterteilt und an seinen Enden verschlossen, wobei die Stege 7 einerseits den Rahmen 1 versteifen und andererseits zur Lagerung bzw. Halterung der Baugruppen dienen.

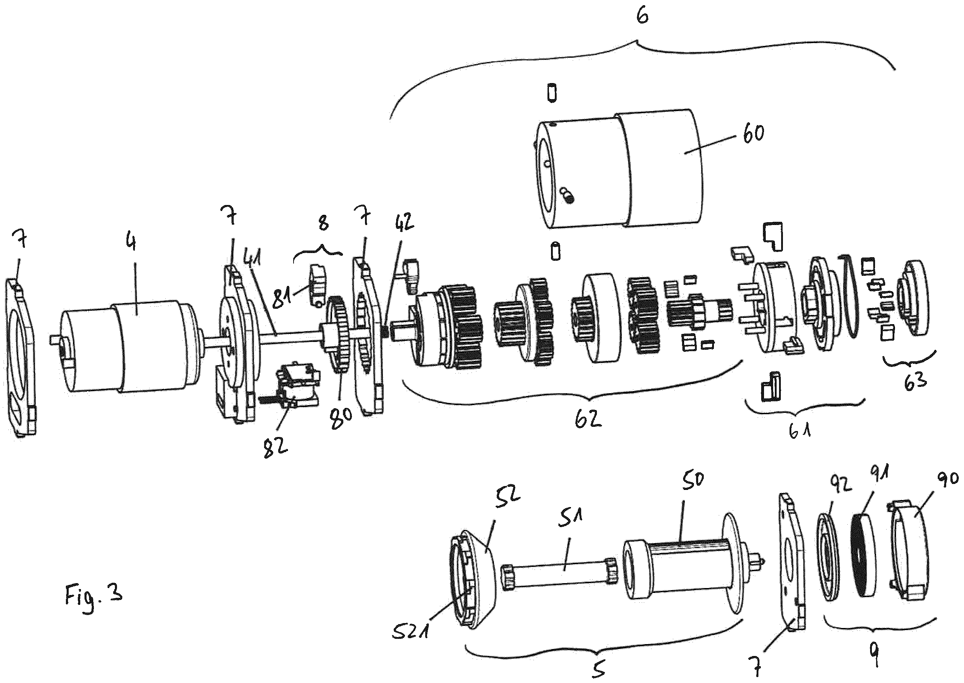

Der Gurtaufroller weist eine Gurtwelle 5 auf, auf welcher der nicht dargestellte Sicherheitsgurt aufwickelbar ist. Ferner ist an der Außenseite des in der Darstellung rechten Steges 7 eine Federkassette 9 befestigt, welche wie nachfolgend noch näher erläutert wird, mit der in der Darstellung rechten Seite der Gurtwelle 5 verbunden ist. Die Gurtwelle 5 ist ferner an ihrer linken Seite mit einem Getriebe 6 verbunden und darüber an einem weiteren Steg 7 gelagert. Weiter ist in einer koaxialen Anordnung zu der Gurtwelle 5 und dem Getriebe 6 eine Verriegelungseinheit 8 und ein Elektromotor 4 vorgesehen. Die Baugruppe aus der Gurtwelle 5 und dem Getriebe 6 bilden im Normalbetrieb des Gurtaufrollers also während des Anschnallvorganges, des Tragens und des Abschnallvorganges des Sicherheitsgurtes, wenn der Elektromotor 4 nicht aktiviert ist, eine Baugruppe, welche durch die in der Figur 3 zu erkennende Triebfeder 91 der Federkassette 9 in Aufwickelrichtung vorgespannt ist. Ferner ist die Baugruppe aus der Gurtwelle 5 und dem Getriebe 6 über die Verriegelungseinheit 8 in Auszugsrichtung blockierbar, wenn vorbestimmte Grenzwerte der Gurtbandauszugsbeschleunigung und/oder Fahrzeugverzögerung überschritten werden.

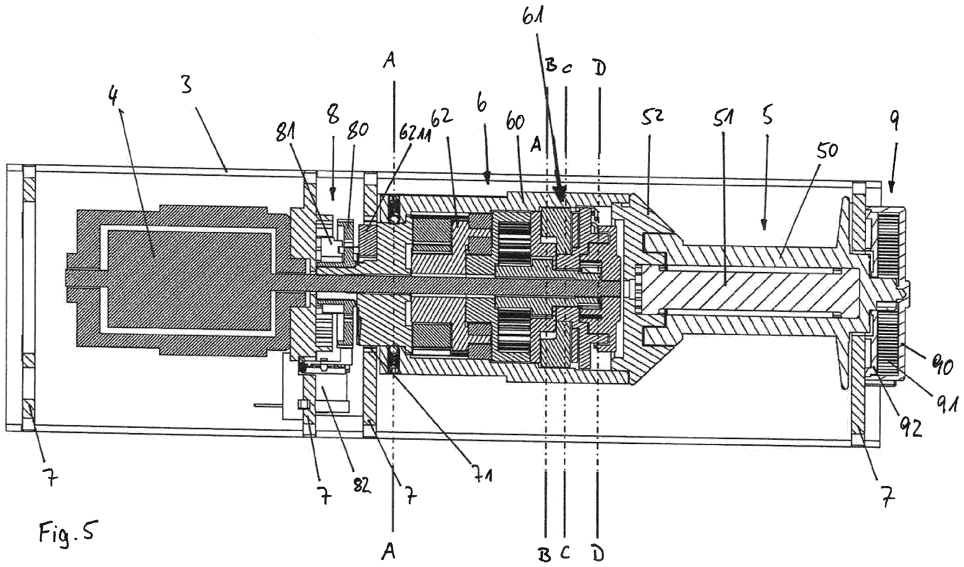

In der Figur 3 ist der Gurtaufroller ohne den Rahmen 1 mit seinen Einzelteilen in Explosionsdarstellung zu erkennen. Ferner ist der Gurtaufroller mit einer der Gehäuseschalen 3 in der Fig. 5 in Schnittdarstellung zu erkennen. Die Federkassette 9 umfasst ein Gehäuse 90, in dem die Triebfeder 91 angeordnet und mit ihrem äußeren Ende befestigt ist. Die offene Seite des Gehäuses 90 ist über eine Gehäuseabdeckung 92 verschlossen, so dass die Federkassette 9 als Baugruppe vorgefertigt und über das Gehäuse 90 an der Außenseite des rechten und ersten Steges 7 befestigt werden kann. Die Gurtwelle 5 weist einen zweiteiligen Aufbau mit einem Gurtwellenkörper 50 und einem stirnseitigen Radialflansch 52 auf, welche über einen Torsionsstab 51 miteinander verbunden sind. Der Torsionsstab 51 ist hier mit einem sehr großen Kraftbegrenzungsniveau von z.B. 7 oder 9 kN oder mehr ausgelegt und dient hier nur als Überlastschutz, wird also weder während des Normalgebrauchs noch bei Unfallszenarien aktiviert. Sofern auf den Überlastschutz verzichtet werden soll, kann der Torsionsstab 51 auch entfallen, für durch den Elektromotor 4 ermöglichten Funktionen ist er jedenfalls bedeutungslos. Ferner ragt der Gurtwellenkörper 50 mit einem Fortsatz in die Federkassette 9 und ist darin über ein Federherz mit der Triebfeder 91 verbunden.

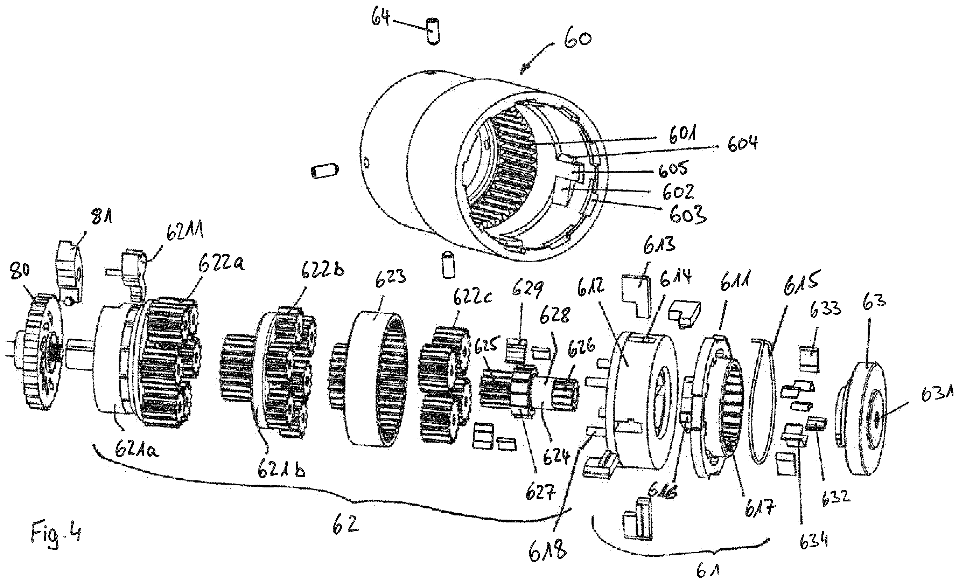

An der linken Seite der Gurtwelle 5 ist das Getriebe 6 angeordnet, welches mit einem Getriebegehäuse 60 über eine Bajonettverbindung mit dem Radialflansch 52 der Gurtwelle 5 drehfest verbunden ist. Die Bajonettverbindung ist hier durch entsprechend geformte Finger 521 an dem Radialflansch 52 und in der Figur 4 zu erkennende, formkorrespondierende Ausnehmungen 603 an dem Getriebegehäuse 60 verwirklicht. Das Getriebe 6 umfasst ein Planetengetriebe 62, eine nachfolgend noch näher erläuterte Kraftbegrenzungseinheit 61, ein drehfest mit der Antriebswelle 41 des Elektromotors 4 verbundenes Antriebsrad 63 und eine Mehrzahl von z.B. in der Figur 4 zu erkennenden, federbelasteten Blockierteilen 64.

Die Baugruppe aus dem Getriebe 6 und der Gurtwelle 5 ist an ihrer linken Seite an einem zweiten Steg 7 gelagert und erstreckt sich durch eine innenverzahnte Öffnung des zweiten Steges 7 hindurch. Weiter ist unter Bildung eines Zwischenraumes ein weiterer dritter Steg 7 vorgesehen, an dem der Elektromotor 4 gehalten ist. In dem Zwischenraum zwischen dem zweiten und dritten Steg 7 ist die Verriegelungseinheit 8 angeordnet. Die Verriegelungseinheit 8 umfasst einen elektrisch ansteuerbaren Aktuator 82, welcher an demselben Steg 7 gehalten ist, an dem auch der Elektromotor 4 befestigt ist. Weiterhin umfasst die Verriegelungseinheit 8 eine drehbar auf einem Fortsatz des Getriebes 6 gelagerte, außenverzahnte Steuerscheibe 80 und eine von einem Gurtbandauszugsbeschleunigungssensor ansteuerbare erste Blockierklinke 81. Die Steuerscheibe 80 weist eine Steuerkontur auf, in die eine zweite Blockierklinke 6211 mit einem Steuerstift eingreift, welche an einem nachfolgend noch näher erläuterten ersten Planetenträger 621a gelagert ist. Die zweite Blockierklinke 6211 bildet hier die in der Funktion nachfolgend noch näher erläuterte zweite Blockiereinrichtung.

In dem Fall einer Ansteuerung der Verriegelungseinheit 8 wird der Aktuator 82 bestromt und dadurch ein Hebel des Aktuators 82 ausgelenkt. Der Hebel des Aktuators 82 steuert dadurch in die Verzahnung der Steuerscheibe 80 ein, welche daraufhin gegenüber der Gurtwelle 5 gegenüber einer weiteren Drehbewegung in Auszugsrichtung des Sicherheitsgurtes angehalten wird und die zweite Blockierklinke 6211 zu einer Bewegung zwingt, während der sie in einen die Gurtwelle 5 in Auszugsrichtung blockierenden Eingriff in eine Innenverzahnung 71 des Steges 7 gelangt. Ferner umfasst die Verriegelungseinheit 8 eine WS-Blockierklinke 81, welche bei einem Überschreiten einer vorbestimmten Gurtbandauszugsbeschleunigung in eine Verzahnung einsteuert und dadurch die Steuerscheibe 8 gegen eine weitere Drehbewegung in Gurtbandauszugsrichtung blockiert und dadurch in gleicher Weise die zweite Blockierklinke 6211 zu der Aussteuerbewegung zwingt. An der linken Seite des Gurtaufrollers ist schließlich ein vierter und letzter Steg 7 vorgesehen, welcher den Rahmen 1 an seiner linken Seite verschließt und versteift. Der vierte Steg 7 kann aber zusätzlich auch zu einer weiteren Lagerung des Elektromotors 4 genutzt werden.

In der Figur 4 ist das Getriebe 6 in einer vergrößerten Explosionsdarstellung zu erkennen. Das Planetengetriebe 62 umfasst einen ersten Planetenträger 621a mit mehreren daran drehbar gelagerten ersten Planetenrädern 622a und der daran schwenkbar gelagerten Blockierklinke 6211, welche die zweite Blockiereinrichtung bildet. Weiter umfasst das Planetengetriebe 62 einen zweiten Planetenträger 621b, welcher an einer Seite ein radial innen mit den ersten Planetenrädern 622a des ersten Planetenträgers 621a kämmendes Sonnenrad und an der anderen Seite eine Mehrzahl von drehbar gelagerten zweiten Planetenrädern 622b aufweist. Ferner ist ein innenverzahntes Hohlrad 623 vorgesehen, welches an einer Seite ein Sonnenrad aufweist, welches radial innen mit den zweiten Planetenrädern 622b des zweiten Planetenträgers 621b kämmt. In die Innenverzahnung des Hohlrades 623 greifen ein Satz weiterer dritter Planetenräder 622c ein, welche ihrerseits jeweils auf axial von einem Trägerteil 612 der Kraftbegrenzungseinheit 61 vorstehenden Stiften 618 drehbar gelagert sind.

Die ersten Planetenräder 622a des ersten Planetenträgers 621a kämmen in einer Innenverzahnung 601 des Gehäuses 60 und stellen darüber eine Verbindung der Gurtwelle 5 zu dem Planetengetriebe 62 her. Weiter umfasst das Planetengetriebe 62 eine drehbar auf einer Antriebswelle 41 des Elektromotors 4 gelagerte Getriebewelle 624, welche an ihrem ersten Ende mit einer ersten Verzahnung 625 radial innen in die Verzahnungen der dritten Planetenräder 622c der in der Darstellung rechten Planetenstufe des Planetengetriebes 62 eingreift. Die Getriebewelle 624 weist ferner eine mittige zweite schräggerichtete Verzahnung 627 auf einem größeren Durchmesser, einen neben der zweiten Verzahnung 627 angeordneten Ringabschnitt 628 mit einer glatten Oberfläche und an dem zweiten Ende eine dritte ebenfalls schräggerichtete Verzahnung 626 auf.

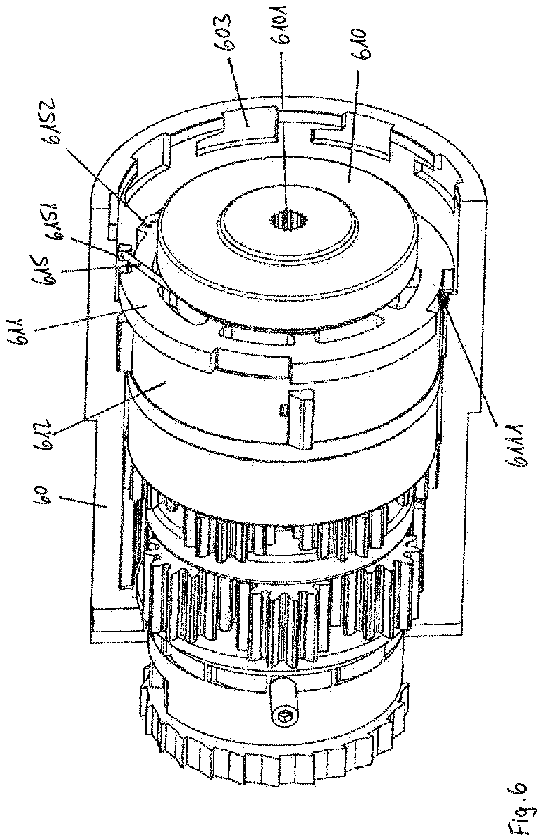

Die Kraftbegrenzungseinheit 61 umfasst einen Entriegelungsring 611 mit einer an einer Seite auf einem axial vorstehenden Ringflansch vorgesehenen, radial nach außen gerichteten Steuerkontur 616 und einem an der anderen Seite vorstehendem Ringflansch mit einer radial gerichteten Innenverzahnung 617. Der Entriegelungsring 611 ist mit einem in der Figur 6 zu erkennenden ersten Ende 6152 einer Feder 615 verbunden, welche ihrerseits mit dem zweiten Ende 6151 mit dem Gehäuse 60 des Getriebes 6 und darüber mit der Gurtwelle 5 verbunden ist. Weiter umfasst die Kraftbegrenzungseinheit 61 das ringförmige Trägerteil 612 mit den axial vorstehenden Stiften 618, auf denen die dritten Planetenräder 622c der in der Darstellung letzten Planetenstufe des Planetengetriebes 62 drehbar gelagert sind. Ferner weist das Trägerteil 612 eine Mehrzahl von schlitzförmigen, radial gerichteten Ausnehmungen 614 auf, in denen jeweils ein plattenförmiges Blockierelement 613 radial verschiebbar aufgenommen ist.

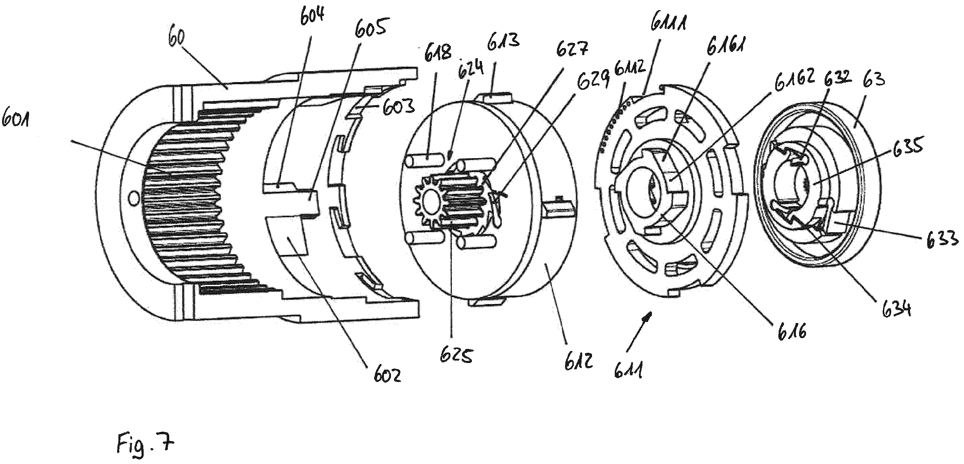

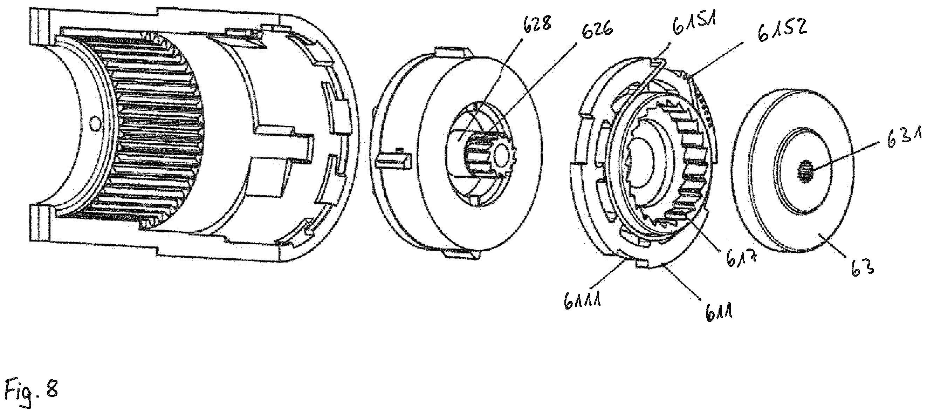

In den Figuren 7 und 8 ist das Trägerteil 612 mit eingeführter Getriebewelle 624 zu erkennen. Die Getriebewelle 624 steht mit dem ersten Ende und der daran angeordneten ersten Verzahnung 625 in Axialrichtung von dem Trägerteil 612 vor und greift mit dieser ersten Verzahnung 625 zwischen die dritten Planetenräder 622c der rechten und dritten Planetenstufe des Planetengetriebes 62. Die zweite Verzahnung 627 ist in dem Durchmesser, der Breite und der Anordnung auf der Getriebewelle 624 so ausgelegt, dass sie in einer Öffnung des Trägerteils 612 angeordnet ist. In der Öffnung des Trägerteils 612 sind ferner zwei federbelastete Sperrklinken 629 schwenkbar gelagert, wobei die Sperrklinken 629 durch die Federbelastung in Eingriffsrichtung in die zweite schräggerichtete Verzahnung 627 gedrängt werden

Der Entriegelungsring 611 weist an der dem Trägerteil 612 zugwandten Seite den Ringflansch mit der darauf angeordneten Steuerkontur 616 auf, welche durch wechselweise angeordnete Rampen 6161 und Vertiefungen 6162 gebildet ist. Ferner weist der Entriegelungsring 611 an seiner Radialaußenseite regelmäßig angeordneten Ausschnitte 6111 und eine oder mehrere Öffnungen 6112 in den zwischen den Ausschnitten 6111 angeordneten Radialstegen auf, wobei die Feder 615 in einer der Öffnungen 6112 mit dem ersten Ende 6152 festgelegt ist. Die Feder 615 ist als Ringfeder ausgebildet und in der Federkraft wesentlich stärker als die Triebfeder 91 in der Federkassette 9 ausgelegt. Ferner ist die Feder 615 so bemessen und mit dem Entriegelungsring 611 und dem Gehäuse 60 verbunden, dass sie den Entriegelungsring 611 im unbelasteten Zustand also in dem montierten Zustand vor der Aktivierung des Elektromotors 4 in einer Stellung fixiert, in welcher die Blockierelemente 613 radial innen von den Rampen 6161 der Steuerkontur 616 des Entriegelungsringes 611 unterstützt werden.

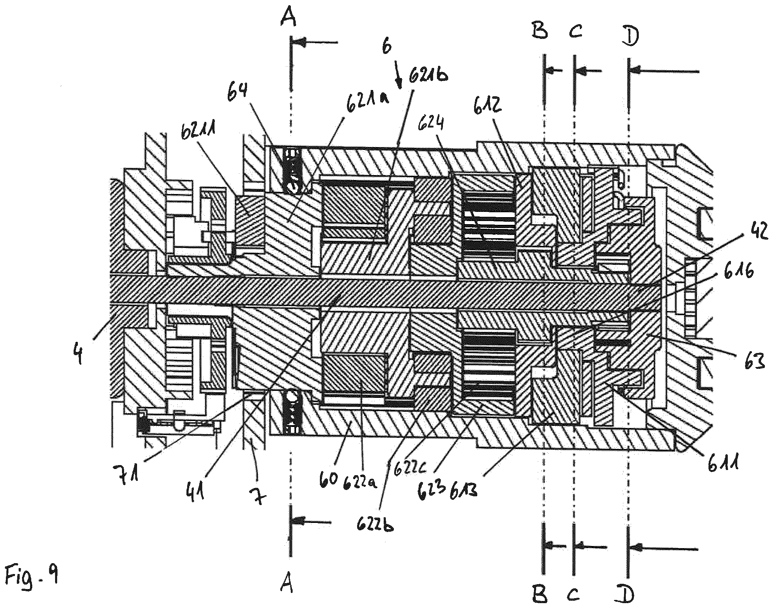

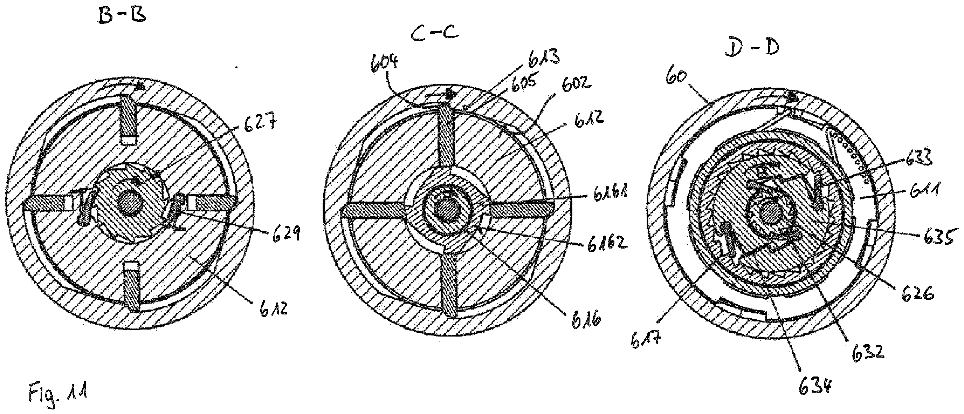

Das Antriebsrad 63 weist eine zentrale axiale Öffnung mit einer Innenverzahnung 631 auf, in welcher der Elektromotor 4 mit seiner in der Figur 3 dargestellten Antriebswelle 41 über ein verzahntes Ende 42 drehfest verbunden ist. Das Antriebsrad 63 und die Antriebswelle 41 bilden damit einen drehfesten Verbund. An dem Antriebsrad 63 ist ein in Richtung des Entriegelungsringes 611 axial vorstehender Ringflansch 635 vorgesehen, welcher Träger von zwei diametral angeordneten, radial nach innen vorstehenden, verschwenkbar gelagerten ersten Klinken 632 und zwei diametral angeordneten, radial nach außen vorstehenden, verschwenkbar gelagerten zweiten Klinken 633 ist. Die ersten und zweiten Klinken 632 und 633 sind durch zwei in dem Ringflansch 635 gehaltene Federbleche 634 in eine von dem Ringflansch 635 weg verschwenkte Stellung federbelastet. Die radial inneren ersten Klinken 632 werden dadurch in die dritte äußere Verzahnung 626 der Getriebewelle 624 gedrängt. Die ersten Klinken 632 und die dritte Verzahnung 626 sind dabei so ausgerichtet, dass eine Drehbewegung des Antriebsrades 63 in Aufwickelrichtung (Pfeilrichtung B in der Fig. 11, Schnittrichtung D-D) des Sicherheitsgurtes auf die Getriebewelle 624 übertragen wird. Diese Drehbewegung der Getriebewelle 624 wird dann über die erste Verzahnung 625 weiter auf die dritten Planetenräder 622c der in der Darstellung der Fig. 9 rechten Planetenstufe übertragen.

In der Figur 9 ist das Getriebe 6 in einer vergrößerten Schnittdarstellung mit verschiedenen Schnittrichtungen zu erkennen. Die Antriebswelle 41 des Elektromotors 4 erstreckt sich durch das Getriebe 6 und treibt das Getriebe 6 über das Antriebsrad 63 an. Die Drehbewegung der Antriebswelle 41 wird dann von dem Antriebsrad 63 über die Kraftbegrenzungseinheit 61, das Planetengetriebe 62 und schließlich das Gehäuse 60 auf die Gurtwelle 5 in verschiedenen Funktionen übertragen, welche nachfolgend noch näher erläutert werden.

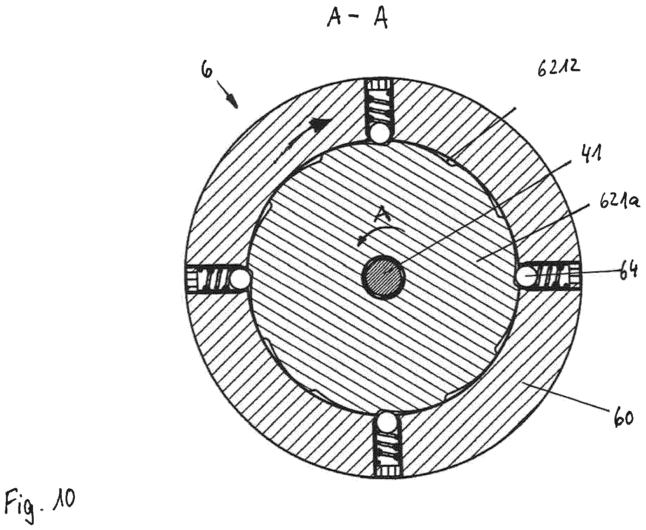

In der Figur 10 ist das Getriebe 6 in Schnittrichtung A-A zu erkennen. Die Antriebswelle 41 erstreckt sich durch den ersten Planetenträger 621a, wobei der erste Planetenträger 621a gegenüber der Antriebswelle 41 frei drehen kann. Ferner ist der erste Planetenträger 621a in Drehrichtung A entgegen dem Uhrzweigersinn in Aufwickelrichtung des Sicherheitsgurtes über eine Rastkontur 6212 und die darin eingreifenden kugelförmigen, federbelasteten Blockierteile 64 bis zu dem Erreichen eines durch die Federvorspannung der Blockierteile 64 definierten Drehmomentes mit dem Gehäuse 60 des Getriebes 6 drehfest verbunden. Über diese so geschaffene Drehverbindung des Planentengetriebes 62 mit dem Gehäuse 60 ist das Planetengetriebe 62 gleichzeitig mit der Gurtwelle 5 verbunden. Durch diese Drehverbindung kann die Gurtwelle 5 bei einer Aktivierung des Elektromotors 4 mit einer Antriebsdrehbewegung der Antriebswelle 41 über das Antriebsrad 63, die Getriebewelle 624, das Planetengetriebe 62 und schließlich über das Gehäuse 60 des Getriebes 6 in Aufwickelrichtung in Pfeilrichtung A des auf der Gurtwelle 5 aufgewickelten Sicherheitsgurtes zu einem Aufrollen des Sicherheitsgurtes nach dem Abschnallen in die Parkposition aufgewickelt werden. Dazu erfolgt die Übertragung der Antriebsdrehbewegung der Antriebswelle 41 des Elektromotors über das Antriebsrad 63 auf die Getriebewelle 624 über die an dem Antriebsrad 63 gelagerten ersten Klinken 632, welche in die dritte Verzahnung 626 eingreifen. Dabei sind die ersten Klinken 632 und die schräggerichtet dritte Verzahnung 626 so ausgerichtet, dass die Drehbewegung in diese Drehrichtung übertragen wird, in die andere Drehrichtung jedoch nicht.

Der Elektromotor 4 wirkt in dieser Funktion als Wickelhilfe für den Sicherheitsgurt. Die Kraftbegrenzungseinheit 61 wird dabei zusammen mit dem Planetengetriebe 62 und dem Gehäuse 60 als eine Baugruppe in einem Übersetzungsverhältnis der Drehbewegung der Antriebswelle 41 von 1:1 von dem Antriebsrad 63 angetrieben. Da das Planetengetriebe 62 in sich eine vorbestimmte Schwergängigkeit aufweist, wird diese Drehbewegung der Getriebewelle 624 während der Aufwickelbewegung des Sicherheitsgurtes in die Parkposition 1:1 über die federbelasteten Blockierteile 64 ohne eine Aktivierung des Planetengetriebes 62 auf das Gehäuse 60 übertragen. Sofern die Blockierteile 64 mit einer ausreichend hohen Federkraft vorgespannt sind, kann auf eine vorbestimmte Schwergängigkeit des Planetengetriebes 62 auch verzichtet werden. Die Antriebswelle 41, das Antriebsrad 63, die Getriebewelle 624, das Gehäuse 60 und schließlich die Gurtwelle 5 drehen in diesem Fall mit einer identischen Drehzahl in Aufwickelrichtung des Sicherheitsgurtes.

Ferner ermöglicht der Gurtaufroller eine reversible Gurtstraffung mit einer höheren Rückzugskraft in dem Sicherheitsgurt zum Herausziehen von möglicher Gurtlose in einer Vor- oder Frühunfallphase in der Antriebsdrehrichtung des Elektromotors 4 in den Schnittdarstellungen der Figur 11. Dazu treibt der Elektromotor 4 die Gurtwelle 5 zunächst in einer identischen Antriebsdrehbewegung über das Antriebsrad 63, in demselben Kraftübertragungsweg wie in der Funktion als Wickelhilfe in Aufwickelrichtung in Pfeilrichtung B allerdings mit einer sehr viel höheren Drehzahl an. Dabei wird die Gurtlose schlagartig herausgezogen, bis die zu überwindende Gurtkraft in dem Sicherheitsgurt soweit angestiegen ist, dass sie größer ist als die Selbsthemmung in dem Planetengetriebe 62 und/oder die Federvorspannung der Blockierteile 64. Dieser Anstieg der Gurtkraft führt dazu, dass das Gehäuse 60 des Getriebes 6 nicht mehr weiterdrehen kann und die Innenverzahnung 601 zu einer feststehenden Verzahnung wird. Das Planetengetriebe 62 wird in dieser Phase kurzzeitig zu einem Drehrichtungsumkehrgetriebe und der erste Planetenträger 621a wird durch die sich an der feststehenden Innenverzahnung 601 abwälzenden ersten Planetenräder 622a zu einer Drehbewegung in Auszugsrichtung des Sicherheitsgurtes angetrieben. Gleichzeitig wird neben der schlagartigen Erhöhung der Drehzahl des Elektromotors 4 zur Aktivierung der reversiblen Gurtstraffung auch die Verriegelungseinheit 8 aktiviert und der Hebel des Aktuators 82 greift in die Verzahnung der Steuerscheibe 80 ein, so dass die Steuerscheibe 80 gegen eine Drehung in Auszugsrichtung des Sicherheitsgurtes blockiert ist. Die an dem ersten Planetenträger 621a gelagerte zweite Blockierklinke 6211 greift mit einem Stift in eine bohnenförmige Steuerkontur der Steuerscheibe 80 ein und ist darüber mit dieser gekoppelt. Dadurch wird die zweite Blockierklinke 6211 aufgrund der Drehbewegung des ersten Planetenträgers 621a gegenüber der blockierten Steuerscheibe 80 zu einer durch die Formgebung der Steuerbohne in der Steuerscheibe 80 definierten Ausschwenkbewegung gezwungen, während der sie zum Eingriff in die Innenverzahnung 71 des Steges 7 gelangt, durch welchen sich der erste Planetenträger 621a erstreckt. Durch diesen Eingriff der zweiten Blockierklinke 6211 wird dann der erste Planetenträger 621a in Auszugsrichtung des Sicherheitsgurtes blockiert und die drehrichtungsumgekehrte Drehbewegung des ersten Planetenträgers 621a ist beendet.

Nachfolgend bildet der blockierte erste Planetenträger 621a ein fahrzeugfestes Widerlager und das Gehäuse 60 bzw. die Gurtwelle 5 werden nun von dem Elektromotor 4 unter Aktivierung des Planetengetriebes 62 mit einer in eine geringere Drehzahl übersetzten Drehzahl mit einem höheren Drehmoment in Aufwickelrichtung angetrieben. Dadurch wird der Sicherheitsgurt nachfolgend mit einer erhöhten Straffkraft von z.B. 1000 N gestrafft und weitere Gurtlose wird aus dem Sicherheitsgurt herausgezogen. Dabei wird das Planetengetriebe 62 über die Getriebewelle 624 angetrieben, ohne dass der Entriegelungsring 611 oder das Trägerteil 612 aufgrund der gegenüber der Innenverzahnung 617 überratschenden zweiten Klinken 633 des Antriebsrades 63 und der gegenüber der zweiten Verzahnung 627 der Getriebewelle 624 überratschenden Sperrklinken 629 des Trägerteils 612 mitbewegt werden. Ferner dreht die Getriebewelle 624 aufgrund der Untersetzung des Planetengetriebes 62 schneller als die Gurtwelle 5 und damit schneller als das Gehäuse 60, was dadurch ermöglicht wird, indem die Getriebewelle 624 gegenüber dem Entriegelungsring 611 frei drehen kann (mittlere Darstellung der Figur 11) und gleichzeitig durch das Überratschen der Sperrklinken 629 gegenüber dem Trägerteil 612 drehen kann (linke Darstellung der Figur 11). Da das Trägerteil 612 über die Blockierelemente 613 gegenüber dem Gehäuse 60 blockiert ist, dreht das Trägerteil 612 zusammen mit dem Gehäuse 60 mit der gleichen Drehzahl und kann durch das Überratschen der Sperrklinken 629 gleichzeitig eine Drehbewegung gegenüber der Getriebewelle 624 ausführen.

In einer weiteren Funktion arbeitet der Gurtaufroller unter Mitwirkung des Elektromotors 4 als ein gesteuerter Kraftbegrenzer, welcher in einer nach der reversiblen Straffung folgenden Vorverlagerungsphase des Insassen im Unfall einen kraftbegrenzten Auszug des Sicherheitsgurtes zur Reduzierung der Insassenbelastung ermöglicht. Dazu weist der Gurtaufroller die Kraftbegrenzungseinheit 61 auf, deren Funktionsweise nachfolgend anhand der Figuren 11 bis 13 näher erläutert wird. In der Figur 11 ist die Stellung der zusammenwirkenden Teile der Kraftbegrenzungseinheit 61 vor der Aktivierung des gesteuerten Kraftbegrenzers also z.B. auch während des reversiblen Gurtstraffens, des Aufwickeln in die Parkposition (Wickelhilfe) oder auch während der nachfolgend noch erläuterten Gurtwarnfunktion zu erkennen. Der Entriegelungsring 611 befindet sich in einer Drehwinkelstellung, in der er die Blockierelemente 613 durch die Rampen 6161 der Steuerkontur 616 insbesondere durch ebene oder kreisringabschnittsförmige Abschnitte in den Endabschnitten der Rampen 6161 radial unterstützt und dadurch in eine radial ausgefahrene Blockierstellung drängt.

Das Gehäuse 60 weist an seiner Innenseite eine Struktur aus zwei in Umfangsrichtung entgegengesetzt ansteigenden Rampen 602 und 604 mit jeweils einem unterschiedlichen Anstiegswinkel und einem dazwischen angeordneten, sich in Axialrichtung erstreckenden Steg 605 mit einer ebenen oder kreisringabschnittsförmigen Oberfläche auf. Der Entriegelungsring 611 ist so angeordnet, dass er die Stege 605 mit den Ausschnitten 6111 umfasst, wobei die Ausschnitte 6111 in Umfangsrichtung geringfügig größer bemessen sind als die Stege 605, so dass der Entriegelungsring 611 geringfügige Drehbewegungen relativ zu dem Gehäuse 60 in Bezug zu der Drehachse des Gurtaufrollers bzw. der Gurtwelle 5 ausführen kann. Die Stege 605 sind dabei in Axialrichtung bewusst länger als die beiden Rampen 602 und 604 ausgebildet, so dass der Entriegelungsring 611 die Stege 605 in einer Ebene umfasst, und die in dem seitlich angeordneten Trägerteil 612 verschieblich geführten Blockierelemente 613 in einer axial benachbarten Ebene zu dem Entriegelungsring 611 angeordnet sind. Ferner werden die Blockierelemente 613 an den Rampen 6161 der Steuerkontur 616 auf dem axial vorstehenden Ringflansch des Entriegelungsringes 611 radial innen unterstützt. Die Blockierelemente 613 liegen dadurch in Umfangsrichtung an den steileren Rampen 604 des Gehäuses 60 an und verbinden dadurch das Trägerteil 612 in der Darstellung der Figur 11 im Uhrzeigersinn also in Einzugsrichtung des Sicherheitsgurtes mit dem Gehäuse 60. Das Trägerteil 612 ist dadurch über die Blockierelemente 613, welche an den steileren Rampen 604 seitlich anliegen, gegenüber dem Gehäuse 60 in Uhrzeigersinndrehrichtung blockiert.

Ausgehend von dieser Anfangsstellung wird die Verrieglungseinheit 8 vor dem Beginn des gesteuerten, kraftbegrenzten Gurtbandauszuges aktiviert, und der Hebel des Aktuators 82 greift daraufhin in die Verzahnung der Steuerscheibe 80 ein, und die Steuerscheibe 80 ist in Gurtauszugsrichtung blockiert. Anschließend wird der Elektromotor 4 so angesteuert, dass er das Antriebsrad 63 in Auszugsrichtung des Gurtbandes antreibt. Dadurch wird die Steuerscheibe 80 ebenfalls in Auszugsrichtung angetrieben und die zweite Blockierklinke 6211 zu einer Aussteuerbewegung in die gehäusefeste Innenverzahnung 71 des Steges 7 gezwungen, wodurch der erste Planetenträger 621a in Auszugsrichtung des Sicherheitsgurtes blockiert wird. Ferner wird der Entriegelungsring 611 über die an dem Antriebsrad 63 gelagerten radial äußeren zweiten Klinken 633 ebenfalls in Auszugsrichtung angetrieben. Dadurch wird der Entriegelungsring 611 soweit gegenüber dem Trägerteil 612 verdreht, dass die Blockierelemente 613 radial innen ihre Unterstützung über die Rampen 6161 der Steuerkontur 616 verlieren. Gleichzeitig wirken in dem Sicherheitsgurt in dieser Frühphase der Vorwärtsverlagerung bzw. nach einer reversiblen oder irreversiblen Gurtstraffung bereits erhebliche Zugkräfte in dem Sicherheitsgurt, welche in einem ersten Schritt dazu führen, dass die Gurtwelle 5 zusammen mit dem Getriebe 6 in einem sehr kurzen Drehwinkel in Auszugsrichtung drehen, wodurch die zweite Blockierklinke 6211 an dem ersten Planetenträger 621a aufgrund der blockierten Steuerscheibe 80 zusätzlich zu der Aussteuerbewegung in die Verzahnung 71 gezwungen wird und den ersten Planetenträger 621a gegenüber dem Rahmen 1 des Gurtaufrollers blockiert, sofern die Blockierung aufgrund des vorangegangenen Antriebes der Steuerscheibe 80 über den Elektromotor 4 noch nicht vollständig abgeschlossen ist. Dabei dreht sich die Gurtwelle 5 bis zur Verrieglung der zweiten Blockierklinke 6211, ohne dass sich der Entriegelungsring 611 gegenüber dem Getriebegehäuse 60 verdreht. Nach der Blockierung des ersten Planetenträgers 621a führt die von dem Sicherheitsgurt ausgeübte Zugkraft zu einer Krafteinleitung in das Planetengetriebe 62.

Aufgrund des über die zweite Blockierklinke 6211 blockierten ersten Planetenträgers 621a wird die erste Stufe des Planetengetriebes 62 zu einem Drehrichtungsumkehrgetriebe, und die Gurtwelle 5 kann zusammen mit dem Gehäuse 60 des Getriebes 6 unter Wirkung der Zugkraft nur weiter in Auszugsrichtung des Sicherheitsgurtes drehen, indem die ersten Planetenräder 622a nicht mehr umlaufen sondern allein um ihre Drehachsen drehen und die Drehbewegung auf die weiteren Planetenstufen in umgekehrter Drehrichtung übertragen. Sofern eine reversible Gurtstraffbewegung vorangegangen ist, was bei einem Unfall anzunehmen ist, ist der erste Planetenträger 621a bereits aufgrund der vorausgegangenen, oben beschriebenen Straffbewegung blockiert, und der beschriebene Blockiervorgang zur Aktivierung der kraftbegrenzten Gurtauszugsbewegung entfällt, bzw. der erste Planetenträger 621a ist bereits zu Beginn der Aktivierung des Elektromotors 4 für den gesteuerten kraftbegrenzten Gurtbandauszug blockiert. Durch die Blockierung des ersten Planetenträgers 621a wird die Drehzahl der Gurtwelle 5 und des Gehäuses 60 durch die Übersetzung in eine schnellere Drehbewegung übersetzt und schließlich auf das Trägerteil 612 übertragen, an dem die dritten Planetenräder 622c der letzten Planetenstufe gelagert und die Blockierelemente 613 verschieblich geführt sind. Damit entsteht in dem Planetengetriebe 62 ein durch den Zug im Gurtband verursachtes, auf das Trägerteil 612 in Pfeilrichtung wirkendes Reaktionsdrehmoment, welches in Umfangsrichtung auf die Blockierelemente 613 wirkt. Da die Blockierelemente 613 radial innen nicht mehr von der Steuerkontur 616 unterstützt werden, gleiten sie an den Rampen 604 des Gehäuses 60 ab und führen dadurch eine erzwungene radial einwärts gerichtete Bewegung aus, während der sie in die Vertiefungen 6162 der Steuerkontur 616 eintauchen. Dadurch wird die Blockierung des Trägerteils 612 gegenüber dem Gehäuse 60 in Umfangsrichtung aufgehoben und das Trägerteil 612 kann um einen kurzen Drehwinkel, in diesem Fall bei vier in 90 Grad zueinander angeordneten Blockierelementen 613 genau um 90 Grad zu dem Gehäuse 60 drehen. Gleichzeitig kann das Gehäuse 60 also die Gurtwelle 5 um einen kleinen Drehwinkel in Auszugsrichtung drehen. Diese Drehbewegungen werden nach diesen Drehwinkeln wieder gestoppt, indem die Blockierelemente 613 auf den Rampen 6161 der Steuerkontur 616 wieder auflaufen, durch diese radial innen unterstützt und dadurch nach außen gedrängt werden, wobei sie radial außen in einen durch die sehr viel flacheren Rampen 602 hinter den Stegen 605 geschaffenen Freiraum eintreten, bis sie schließlich wieder an den steileren Rampen 604 des Gehäuses 60 in Umfangsrichtung zur Anlage gelangen und die weitere Drehbewegung des Trägerteils 612 zu dem Gehäuse 60 blockieren.

Die Blockierelemente 613 bilden hier die erste Blockiereinrichtung, welche den kraftbegrenzten Auszug des Sicherheitsgurtes durch ihre Bewegung in einem sich wiederholenden Vorgang aus einer Freigabe und Blockierung der Auszugsbewegung des Sicherheitsgurtes ermöglicht. Dabei dient der Elektromotor 4 durch seine Aktivierung der Auslösung bzw. der Ermöglichung der Bewegung der ersten Blockiereinrichtung, indem er den Entriegelungsring 611 mit der darauf vorgesehenen Steuerkontur 616 antreibt und dadurch die Freigabe der Blockierelemente 613 in Verbindung mit den wirkenden Zugkräften im Sicherheitsgurt bewirkt bzw. ermöglicht. Dabei ist die Form der radialen Steuerkontur 616 mit den wechselweise angeordneten Rampen 6161 und Vertiefungen 6162 von besonderer Bedeutung, da durch sie die Radialbewegung der Blockierelemente 613 erzwungen bzw. ermöglicht und gesteuert wird, welche zur Freigabe und Blockierung der ersten Blockiereinrichtung von besonderer Bedeutung ist. Weiter ist das Planetengetriebe 62 hier von besonderer Bedeutung, da durch das Planetengetriebe 62 die Auszugsdrehbewegung der Gurtwelle 5 in eine wesentlich schnellere Drehbewegung des Trägerteils 612 übersetzt wird, was dazu führt, dass der für die Blockierung der ersten Blockiereinrichtung zur Verfügung stehende Blockierweg vergrößert wird. Ferner werden dadurch auch die auf die Blockierelemente 613 wirkenden Kräfte reduziert. Ferner ist es von Vorteil, dass das Getriebe 6 in Form des Planetengetriebes 62 in dieser Phase als Drehrichtungsumkehrgetriebe arbeitet, so dass das Trägerteil 612 und das Gehäuse 60, zwischen denen das Planetengetriebe 62 angeordnet ist, entgegengesetzte Drehbewegungen ausführen, und die zur Blockierung der ersten Blockiereinrichtung erforderliche Relativbewegung weiter vergrößert wird. Das Gehäuse 60 bildet hier mit der Innenverzahnung 601 das erste Teil des Drehrichtungsumkehrgetriebes, welches in einer Drehverbindung mit der Gurtwelle 5 steht. Das Trägerteil 612 bildet hier das erfindungsgemäße zweite Teil des Drehrichtungsumkehrgetriebes, welches gegenüber dem Gehäuse 60 also dem ersten Teil von dem Drehrichtungsumkehrgetriebe zu einer entgegengesetzt gerichteten Drehbewegung angetrieben wird, wobei die Blockierelemente 613 also die erste Blockiereinrichtung zwischen dem ersten und zweiten Teil angeordnet sind.

Das Gehäuse 60 des Getriebes 6 also hier das erste Teil weist eine Blockierkontur, gebildet durch die steileren Rampen 604, auf, welche bei einem Anliegen der Blockierelemente 613 ein Weiterdrehen des Trägerteils 612 gegenüber dem Gehäuse 60 blockieren bzw. stoppen.

Dieses erste Teil ist durch das Gehäuse 60 in Form eines drehfest mit der Gurtwelle 5 verbundenen rohrförmigen, axialen Fortsatz ausgebildet, welcher gleichzeitig in einer zweiten Funktion das Gehäuse 60 für das Getriebes 6 bildet. Das Gehäuse 60 umfasst das Getriebe 6 zur Außenseite hin und schützt dieses somit vor äußeren Einwirkungen. Außerdem bildet das Gehäuse 60 in einer kompakten Bauform an seiner radial inneren Seite die Blockierstruktur für die Blockierelemente 613 aus.

Die Kraftbegrenzungscharakteristik kann ferner dadurch beeinflusst werden, indem der Entriegelungsring 611 mit einer erhöhten Drehzahl angetrieben wird. Dadurch wird der Entriegelungsring 611 mit der Steuerkontur 616 dem in Auszugsrichtung drehenden Getriebegehäuse 60 nachgeführt, wodurch wiederum die Anzahl der Blockierungen der Blockierelemente 613 in Bezug zu einer Umdrehung des Getriebegehäuses 60 verringert werden kann. Im Extremfall ist es sogar möglich, den Entriegelungsring 611 mit einer der Drehzahl des Getriebegehäuses 60 in Auszugsrichtung entsprechenden Drehzahl anzutreiben, und den Entriegelungsring 611 dabei in einer Drehwinkelstellung zu dem Getriebegehäuse 60 zu halten, in der die Rampen 6161 der Steuerkontur 616 beim Umlaufen in einem Drehwinkel zwischen zwei Rampen 602 und 604 unterschiedlicher Stege 605 des Getriebegehäuses 60 ausgerichtet sind, so dass die Blockierelemente 613 beim Überfahren der Rampen 6161 der Steuerkontur 616 nicht an den Rampen 604 blockierend zur Anlage gelangen und praktisch umlaufen können ohne dabei zu blockieren. Der Entriegelungsring 611 wird dadurch in einer "Offenstellung" zu dem Getriebegehäuse 60 gehalten, und die Blockierung des Trägerteils 612 gegenüber dem Getriebegehäuse 60 wird verhindert. Damit kann ein maximal schneller Gurtbandauszug mit einer geringstmöglichen Kraftbegrenzung realisiert werden, wobei die Kraftbegrenzung allein durch die reibungsbedingte Energievernichtung in dem Getriebe 6 bewirkt wird.

Die Feder 615 ist so ausgelegt, dass ihre Federkraft deutlich größer ist als die Federkraft der Triebfeder 91. Dadurch kann zusätzlich eine Komfortfunktion verwirklicht werden, indem der Elektromotor 4 die Gurtwelle 5 über den Entriegelungsring 611, die Feder 615, das Gehäuse 60 direkt in Aufwickel- oder Abwickelrichtung antreibt und dadurch die auf die Gurtwelle 5 wirkende Rückzugskraft erhöht oder reduziert. Das Planetengetriebe 62 wird in diesem Fall durch die Kraftübertragung über die Feder 615 überbrückt. Dies gilt für die Übertragung von sehr kleinen Drehmomenten und entsprechenden Drehzahlen, bei denen die inneren ersten Klinken 632 nicht in Eingriff mit der dritten Verzahnung 626 der Getriebewelle 624 gelangen, so dass die Getriebewelle 624 nicht angetrieben wird. Sofern das Gehäuse 60 zusätzlich über die federbelasteten Blockierteile 64 mit dem ersten Planetenträger 621a in Umfangsrichtung verbunden ist, führt dies zusätzlich zu der möglichen Schwergängigkeit des Planetengetriebes 62 zu einer Blockade des Planetengetriebes 62, und zur Übertragung der Drehbewegung des Elektromotors 4 im Verhältnis von 1:1 auf die Gurtwelle 5.

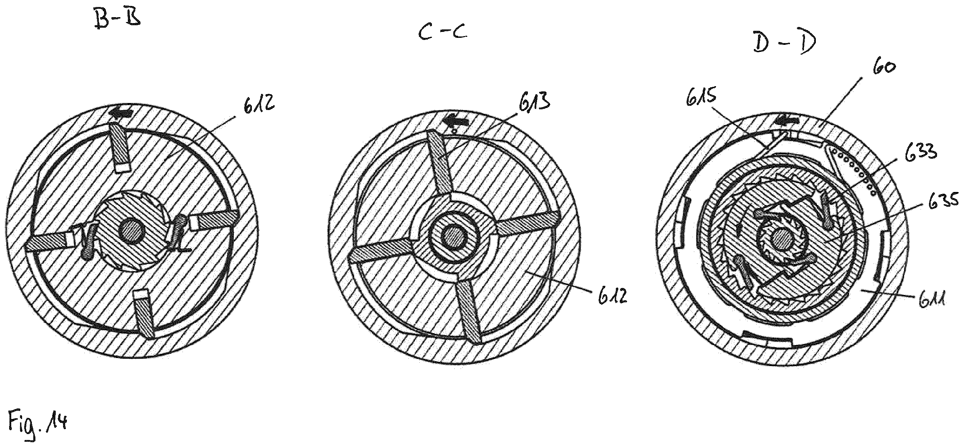

In einer weiteren Funktion wird der Elektromotor 4 dazu verwendet, das Gurtband zu einer für den Insassen deutlich fühlbaren Vibration anzuregen (Gurtwarner, oder auch "Haptic Warning"). In der Figur 14 sind dazu drei Schnittdarstellungen des Gurtaufrollers während der Ausführung der Gurtwarnfunktion zu erkennen. Der Elektromotor 4 treibt das Antriebsrad 63 während des Ausführens der Gurtwarnfunktion identisch wie bei dem gesteuerten kraftbegrenzten Gurtbandauszug in Auszugsrichtung an, mit dem Unterschied, dass zu diesem Zeitpunkt keine Zugkraft in dem Sicherheitsgurt wirkt. Dies hat zu Folge, dass der Entriegelungsring 611 über die Kinken 633 des Antriebsrades 63 in Auszugsrichtung mitgenommen wird. Diese Drehbewegung des Entriegelungsringes 611 wird über die Feder 615 auf die Gurtwelle 5 übertragen, wobei das Trägerteil 612 und das gesamte Getriebe 6 aufgrund der fehlenden Zugkraft in dem Sicherheitsgurt über die Blockierelemente 613 als eine Baugruppe mitgenommen werden. Der Elektromotor 4 dreht dabei soweit das ca. 5 bis 10 mm Gurtbandlänge ausgefördert werden, bis die Bestromung des Elektromotors 4 unterbrochen wird. Der Elektromotor 4 wird in diesem Fall gepulst bestromt, d.h. die Bestromung wird in regelmäßigen Abständen unterbrochen. Während der Unterbrechung der Bestromung des Elektromotors 4 wirken auf die Gurtwelle 5 keine Kräfte in Gurtauszugsrichtung, so dass die Gurtwelle 5 von der Federkraft der Triebfeder 91 in der Federkassette 9 wieder in Aufwickelrichtung zurückgezogen wird, bevor sich der Vorgang wiederholt. Der an dem Insassen anliegende Sicherheitsgurt wird dadurch zu einer Vibration angeregt, ohne dass sich die von dem Sicherheitsgurt auf den Insassen ausgeübte Gurtkraft erhöht. Der Insasse nimmt den Gurtwarner in diesem Fall nur als ein "Zappeln" des Gurtbandes war. Die dabei ausgeförderte Gurtbandauszugslänge oder auch die Frequenz des "Zappeln" kann dabei durch die Dauer der Bestromung und die Dauer der Unterbrechung der Bestromung eingestellt werden. Da die Triebfeder 91 ohnehin vorhanden ist, kann der Elektromotor 4 hier ohne Mehrkosten zu einer weiteren Funktion verwendet werden.

Gleichzeitig zu der Aktivierung des Elektromotors 4 kann der Aktuator 82 bestromt sein, so dass er mit dem Hebel in die Verzahnung der Steuerscheibe 80 eingreift. Dies hat zur Folge, dass die zweite Blockierklinke 6211 bei der Aktivierung des Elektromotors 4 und einem Antrieb der Gurtwelle 5 in Auszugsrichtung ausgefahren und in die Verzahnung 71 des Steges 7 eingesteuert wird. Dadurch ist die Ausförderbewegung des Sicherheitsgurtes während der Aktivierung der Funktion des Gurtwarners auf die Länge des Verriegelungsweges begrenzt, und der Sicherheitsgurt wird unter keinen Umständen unbegrenzt freigegeben. Diese Blockierung kann dann wieder aufgehoben werden, wenn die Triebfeder 91 die Gurtwelle 5 anschließend wieder in Aufwickelrichtung antreibt.

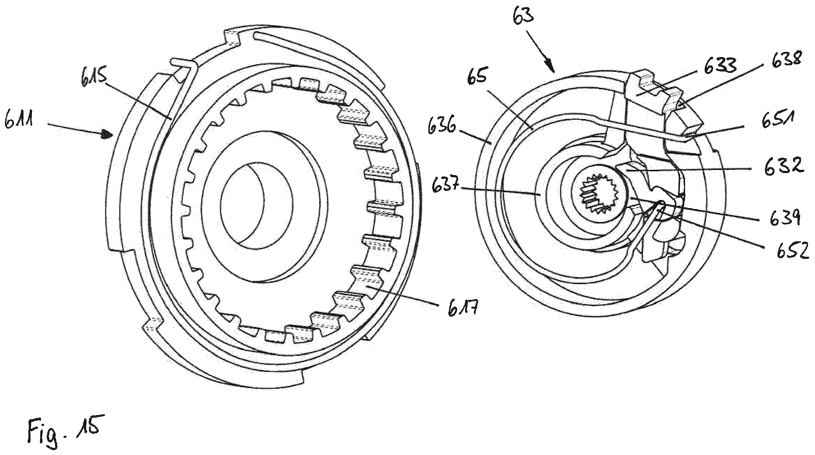

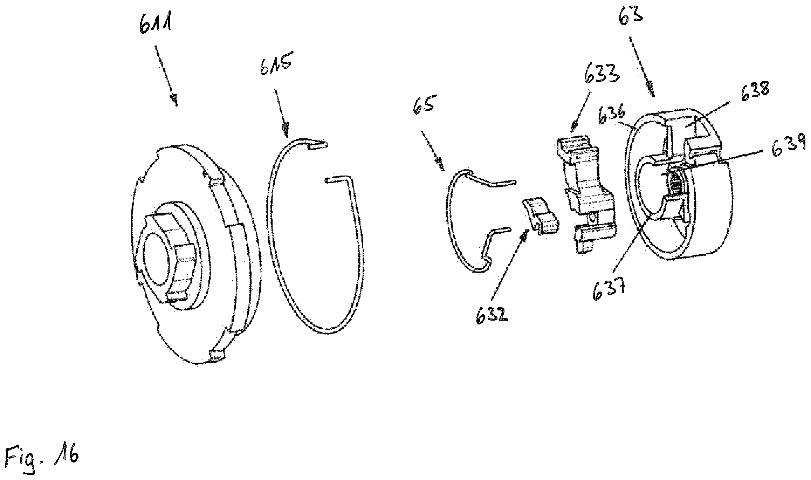

In den Figuren 15 und 16 ist das Antriebsrad 63 mit dem Entriegelungsring 611 gemäß einer zweiten Ausführungsform zu erkennen. Das Antriebrad 63 weist zwei zu der axialen Öffnung mit der Innenverzahnung 631 konzentrische axial vorstehenden Ringvorsprünge 636 und 637 auf, welche jeweils in einem Segment zu einer Öffnung 638 und 639 unterbrochen sind. Ferner sind eine erste und eine zweite Klinke 632 und 633 vorgesehen, welche sich gegeneinander abstützen und über eine einzige Ringfeder 65 vorgespannt sind. Die Ringfeder 65 ist mit ihrem äußeren ersten Ende 651 an dem Antriebsrad 63 in Umfangsrichtung festgelegt und mit ihrem inneren zweiten Ende 652 in einer Tasche an der inneren ersten Klinke 632 eingehängt. Die Ringfeder 65 ist so ausgelegt, dass sie die beiden aneinander anliegenden ersten und zweiten Klinken 632 und 633 im entspannten Zustand so belastet, dass die innere erste Klinke 632 mit ihrer Blockierspitze vor der Öffnung 639 des inneren Ringvorsprunges 637 steht und nicht in die hinzuzudenkende dritte Verzahnung 626 der Getriebewelle 624 eingreift, während die äußere zweite Klinke 633 durch die Öffnung 638 des radial äußeren Ringvorsprunges 636 radial nach außen vorsteht, wie in der rechten Darstellung der Figur 15 zu erkennen ist, und in die hinzuzudenkende Innenverzahnung 617 des Entriegelungsringes 611 eingreift. Für die Funktionsfähigkeit wäre es aber auch nicht von Nachteil, wenn die innere erste Klinke 632 in die dritte Verzahnung 626 eingreifen würde, da der Eingriff für diese Funktion unerheblich ist.

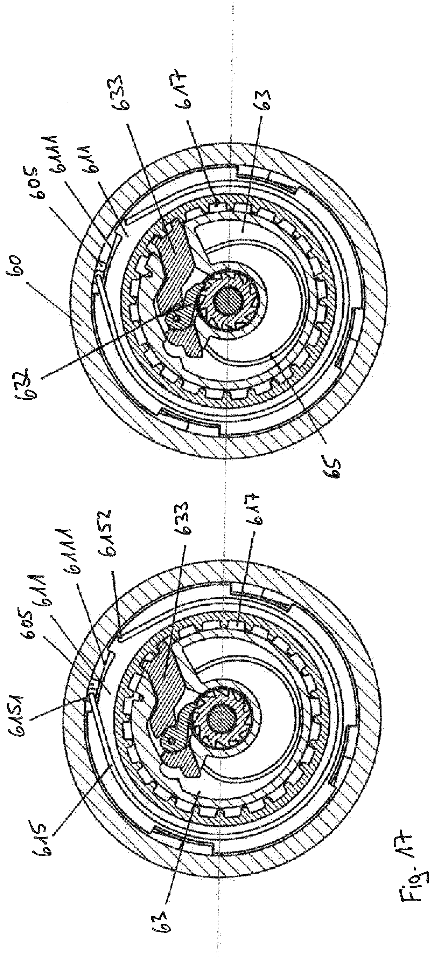

In der Figur 17 ist der Gurtaufroller mit dem Antriebsrad 63 gemäß dem zweiten Ausführungsbeispiel nach den Figuren 15 und 16 in Schnittrichtung D-D der Figuren 5 und 9 gezeigt. Die äußere zweite Klinke 633 wird durch die Ringfeder 65 des Antriebsrades 63 in eine radial äußere Stellung gedrängt, in der sie mit ihren Zähnen in die Innenverzahnung 617 des Entriegelungsringes 611 eingreift und dadurch abgesehen von einem geringfügigen Spiel bis zu dem Überschreiten eines vorbestimmten Drehmomentes und einer vorbestimmten Drehzahl des Elektromotors 4 eine drehfeste Verbindung zwischen dem Antriebsrad 63 und dem Entriegelungsring 611 herstellt. Da die zwischen dem Entriegelungsring 611 und dem Gehäuse 60 wirkende Feder 615 eine deutlich höhere Federkraft als die Triebfeder 91 aufweist, kann die Gurtwelle 5 damit über die zweite Klinke 633, den Entriegelungsring 611 und schließlich die Feder 615 sowohl in Aufwickelrichtung als auch in Abwickelrichtung zur Verringerung oder zur Erhöhung der auf die Gurtwelle 5 wirkenden Rückzugskraft angetrieben werden. (Komfortfunktion) Ferner kann der Sicherheitsgurt dadurch nach dem Abschnallen mit einer erhöhten Rückzugskraft in die Parkposition (Belt Parking) aufgewickelt werden. Grundsätzlich kann das Drehmoment dabei allein über die Feder 615 übertragen werden. Sofern es erforderlich ist, kann das übertragbare Drehmoment aber auch alternativ oder zusätzlich durch eine seitliche formschlüssige Anlage der die Ausschnitte 6111 begrenzenden Radialstege des Entriegelungsringes 611 an den Stegen 605 des Gehäuses 60 erhöht werden. Durch die so geschaffene Drehverbindung kann die über die Blockierteile 64 des ersten Ausführungsbeispiels geschaffene Drehverbindung (siehe Figur 10) entfallen.

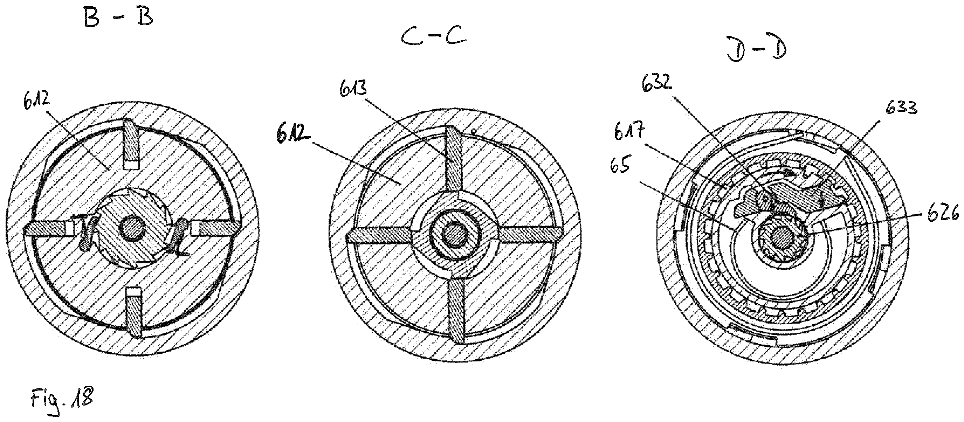

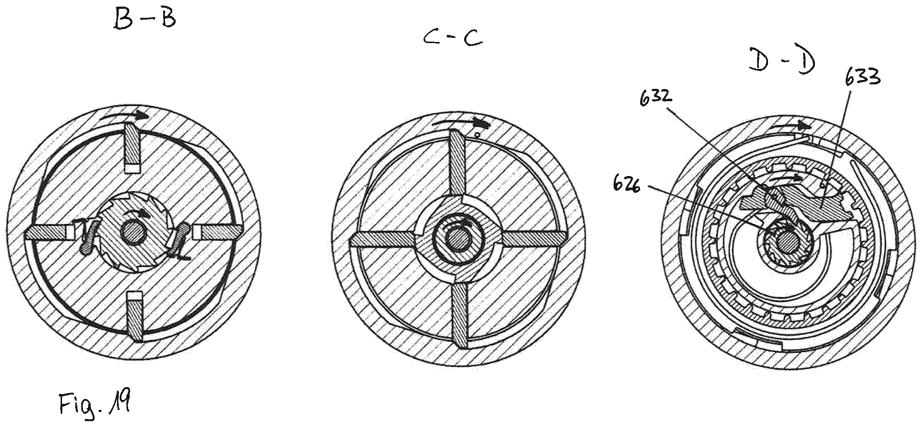

In den Figuren 18 und 19 ist der Gurtaufroller mit einem Antriebsrad 63 gemäß dem zweiten Ausführungsbeispiel in einer Anfangsphase und einer späteren Phase der reversiblen Gurtstraffung zu erkennen. Ausgehend von der in der Figur 17 gezeigten Stellung der beiden Klinken 632 und 633 vor der Aktivierung des Elektromotors 4 werden die Klinken 632 und 633 bei einer Aktivierung des Elektromotors 4 für eine reversible Gurtstraffung aufgrund des hohen Drehmomentes und der sehr viel höheren Drehzahl trägheitsbedingt gegen die Federkraft der Ringfeder 65 radial einwärts verschwenkt. Dabei gelangt die radial äußere zweite Klinke 633 außer Eingriff der Innenverzahnung 617 des Entriegelungsringes 611 und die radial innere erste Klinke 632 in Eingriff in die dritte Verzahnung 626 der Getriebewelle 624. Durch den Eingriff der inneren ersten Klinke 632 in die dritte Verzahnung 626 der Getriebewelle 624 und das gleichzeitige außer Eingriff gelangen der zweiten Klinke 633 wird eine Drehverbindung zwischen dem Antriebsrad 63 und der Getriebewelle 624 geschaffen, während die Drehverbindung zwischen dem Antriebsrad 63 und dem Entriegelungsring 611 gleichzeitig aufgehoben wird. Nachfolgend treibt der Elektromotor 4 die Getriebewelle 624 über das Antriebsrad 63, wie in der Figur 19 zu erkennen ist, in Aufwickelrichtung an, und die Gurtwelle 5 wird nach demselben Prinzip wie zu dem ersten Ausführungsbeispiel nach der Figur 11 beschriebenen Bewegungsablauf des Planetengetriebes 62 mit einer in eine niedrigere Drehzahl untersetzten Drehzahl dafür aber mit einem höheren Drehmoment in Aufwickelrichtung angetrieben.

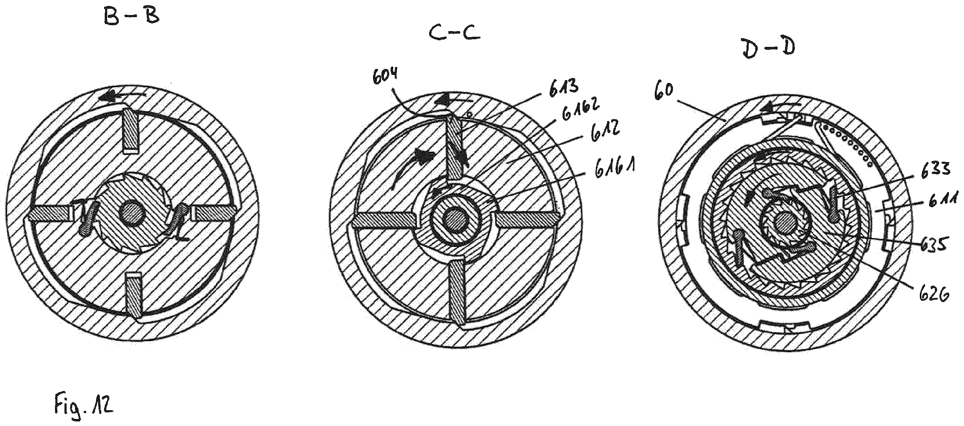

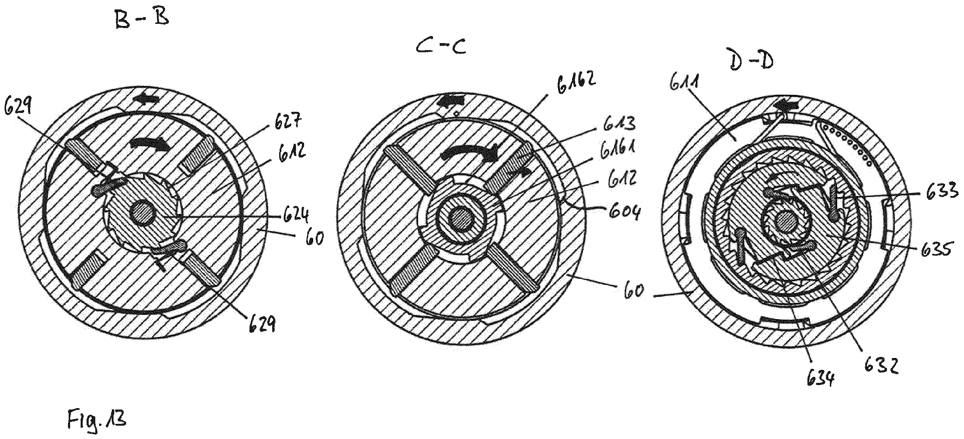

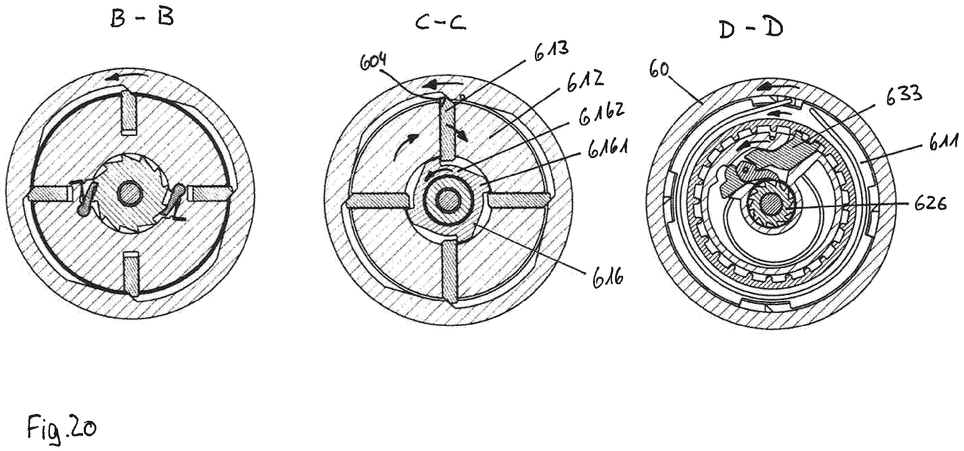

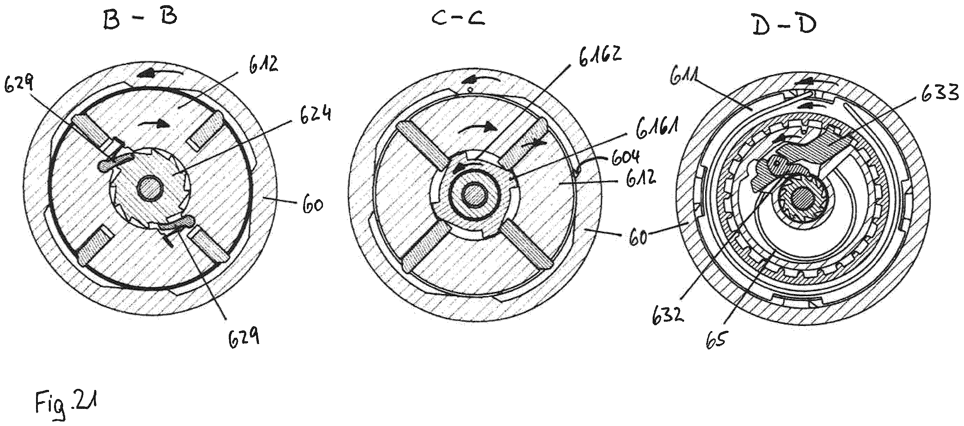

In den Figuren 20 und 21 ist der Gurtaufroller in der Funktion als elektronischer Kraftbegrenzer mit dem Antriebsrad 63 nach dem zweiten Ausführungsbeispiel zu erkennen, wobei der Bewegungsablauf und der kraftbegrenzte Gurtbandauszug nach demselben Bewegungsablauf erfolgt, wie er bereits zu den Figuren 12 und 13 beschrieben wurde. Insoweit wird auf die dortige Beschreibung verwiesen.

Der Elektromotor 4 treibt auch hier den Entriegelungsring 611 über die radial äußere zweite Klinke 633 in Auszugsrichtung des Sicherheitsgurtes an, so dass die Blockierelemente 613 ihre Unterstützung an der Steuerkontur 616 verlieren und dadurch aus der blockierenden Stellung radial nach innen gedrängt werden, und die kraftbegrenzte Gurtbandauszugsbewegung ermöglicht wird.

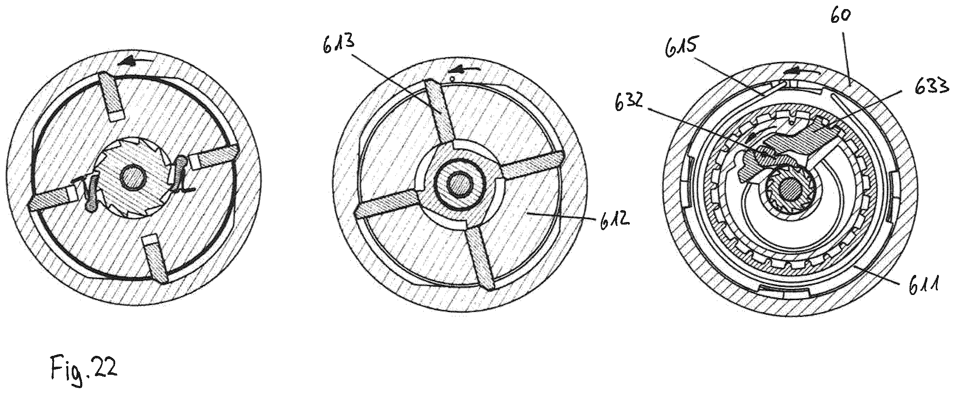

In der Figur 22 ist der Gurtaufroller in seiner Funktion als Gurtwarner zu erkennen, wobei der Bewegungsablauf wiederum identisch zu dem zu der Fig. 14 beschriebenen Bewegungsablauf ist, und das Antriebrad 63 nach der Figur 15 vorgesehen ist.

Der Gurtaufroller kann mit der beschriebenen Kraftbegrenzungseinheit 61 als einzige Funktion versehen sein. Es ist aber auch denkbar den Gurtaufroller mit einigen oder allen beschriebenen Zusatzfunktionen wie z.B. reversibler Gurtstraffer, Aufwickelhilfe, Komfortfunktion zur Reduzierung oder Erhöhung der Rückzugskraft oder Gurtwarner zu versehen, welche wie beschrieben, in Verwendung eines einzigen Elektromotors 4 realisiert werden können.

### Bezugszeichenliste

1 Rahmen
2 Schlitz
3 Gehäuseschalen
4 Elektromotor
41 Antriebswelle
42 verzahntes Ende
5 Gurtwelle
50 Gurtwellenkörper
51 Torsionsstab
52 Radialflansch
521 Finger
6 Getriebe
60 Getriebegehäuse
601 Innenverzahnung
602 Rampe
603 Ausnehmungen
604 Rampe
605 Steg
61 Kraftbegrenzungseinheit
611 Entriegelungsring
6111 Ausschnitt
6112 Öffnung
612 Trägerteil
613 Blockierelement
614 Ausnehmungen
615 Feder
6151 zweites Ende
6152 erstes Ende
616 Steuerkontur
6161 Rampe
6162 Vertiefung
617 Innenverzahnung
618 Stift
62 Planetengetriebe
621a erster Planetenträger
6211 Blockierklinke
6212 Rastkontur
621b zweiter Planetenträger
622a erste Planetenräder
622b zweiten Planetenräder
622c dritte Planetenräder
623 Hohlrad
624 Getriebewelle
625 erste Verzahnung
626 dritte Verzahnung
627 zweite Verzahnung
628 Ringabschnitt
629 Sperrklinke
63 Antriebsrad
631 Innenverzahnung
632 erste Klinke
633 zweite Klinke
634 Federblech
635 Ringflansch
636 erster Ringvorsprung
637 zweiter Ringvorsprung
638 Öffnung
639 Öffnung
64 Blockierteil
65 Ringfeder
651 erstes Ende
652 zweiten Ende
7 Steg
71 Innenverzahnung
8 Verriegelungseinheit
80 Steuerscheibe
81 WS-Blockierklinke
82 Aktuator
9 Federkassette
90 Gehäuse
91 Triebfeder
92 Gehäuseabdeckung

## Patentansprüche

1. Gurtaufroller mit
- einer drehbar in einem Rahmen (1) gelagerten Gurtwelle (5), auf welcher ein Sicherheitsgurt aufwickelbar ist, und
- einer Kraftbegrenzungseinheit (61), welche bei einer Aktivierung eine Drehbewegung der Gurtwelle (5) in Auszugsrichtung des Sicherheitsgurtes ermöglicht,
**dadurch gekennzeichnet, dass**
- die Kraftbegrenzungseinheit (61) einen Elektromotor (4) und eine erste Blockiereinrichtung aufweist, und
- die erste Blockiereinrichtung dazu eingerichtet ist, angesteuert durch die Aktivierung des Elektromotors (4) eine Drehbewegung der Gurtwelle (5) in Auszugsrichtung in einer sich wiederholenden Abfolge freizugeben und wieder zu blockieren, wobei
- die erste Blockiereinrichtung in Abhängigkeit von einer Aktivierung des Elektromotors (4) aus einer die Gurtwelle (5) blockierenden Stellung in eine die Gurtwelle (5) freigebende Stellung bewegbar ist, und
- die erste Blockiereinrichtung durch die ermöglichte Drehbewegung der Gurtwelle (5) in Auszugsrichtung nach einem vorbestimmten Drehwinkel der Gurtwelle (5) selbsttätig wieder blockiert, wobei
- ein durch den Elektromotor (4) angetriebener Entriegelungsring (611) vorgesehen ist, welcher eine Steuerkontur (616) aufweist, und
- die erste Blockiereinrichtung durch wenigstens ein an der Steuerkontur (616) anliegendes Blockierelement (613) gebildet ist.

2. Gurtaufroller nach Anspruch 1, **dadurch gekennzeichnet, dass**
- die Steuerkontur (616) durch eine Rampenstruktur mit einer der Anzahl der Blockierelemente (613) entsprechenden Anzahl von Rampen (6161) und zwischen den Rampen (6161) angeordneten Vertiefungen (6162) gebildet ist, an denen das Blockierelement (613) in der blockierenden Stellung und der freigebenden Stellung wechselweise anliegt.

3. Gurtaufroller nach einem der vorangegangenen Ansprüche, **dadurch gekennzeichnet, dass**
- ein Drehrichtungsumkehrgetriebe vorgesehen ist, welches über ein erstes Teil in einer Drehverbindung mit der Gurtwelle (5) steht, und
- die erste Blockiereinrichtung zwischen dem ersten Teil des Drehrichtungsumkehrgetriebes und einem durch das Drehrichtungsumkehrgetriebe zu einer gegenüber der Drehrichtung der Gurtwelle (5) entgegengesetzten Drehrichtung angetriebenen zweiten Teil des Drehrichtungsumkehrgetriebes angeordnet ist.

4. Gurtaufroller nach Anspruch 3, **dadurch gekennzeichnet, dass**
- das zweite Teil gegenüber dem ersten Teil eine durch das Drehrichtungsumkehrgetriebe in eine höhere Drehzahl übersetzte Drehbewegung ausführt.

5. Gurtaufroller nach einem der Ansprüche 3 oder 4, **dadurch gekennzeichnet, dass**
- das Drehrichtungsumkehrgetriebe durch ein Planetengetriebe (62) gebildet ist, und dass
- die Umkehr der Drehrichtung in dem Drehrichtungsumkehrgetriebe durch einen über eine zweite Blockiereinrichtung gegenüber dem Rahmen (1) des Gurtaufrollers blockierten ersten Planetenträger (621) des Planetengetriebes (62) verwirklicht ist.

6. Gurtaufroller nach Anspruch 3 bis 5, **dadurch gekennzeichnet, dass**
- das erste Teil oder das zweite Teil des Drehrichtungsumkehrgetriebes eine Blockierkontur aufweisen, an welcher die erste Blockiereinrichtung in der blockierenden Stellung anliegt.

7. Gurtaufroller nach einem der Ansprüche 3 bis 6, **dadurch gekennzeichnet, dass**
- das erste Teil durch einen drehfest mit der Gurtwelle (5) verbundenen, rohrförmigen, axialen Fortsatz gebildet ist, welcher das Gehäuse (60) des Drehrichtungsumkehrgetriebes bildet.

8. Gurtaufroller nach den Ansprüchen 6 oder 7 in Rückbeziehung auf Anspruch 6, **dadurch gekennzeichnet, dass**
- die Blockierkontur durch in Umfangsrichtung gerichtete, an der Innenseite des ringförmigen Fortsatzes angeordnete Rampen (604) gebildet ist, an denen das Blockierelement (613) in der blockierenden Stellung anliegt.

9. Gurtaufroller nach einem der Ansprüche 1 oder 2 oder nach einem der Ansprüche 3 bis 8 in Rückbeziehung auf einen der Ansprüche 1 oder 2, **dadurch gekennzeichnet, dass**
- der Entriegelungsring (611) über eine Feder (615) gegenüber der Gurtwelle (5) federbelastet ist.

10. Gurtaufroller nach Anspruch 9, **dadurch gekennzeichnet, dass**
- die Gurtwelle (5) durch eine sich rahmenfest abstützende Triebfeder (91) in Aufwickelrichtung des Sicherheitsgurtes federbelastet ist, und
- die Federkraft der Triebfeder (91) kleiner ist als die Federkraft der den Entriegelungsring (611) belastenden Feder (615).

## Claims

1. Belt retractor, comprising
- a belt shaft (5), which is rotatably mounted in a frame (1) and on which a seat belt can be wound, and
- a force-limiting unit (61), which, when activated, allows a rotational movement of the belt shaft (5) in the extension direction of the seat belt,
**characterized in that**
- the force-limiting unit (61) has an electric motor (4) and a first blocking device, and
- the first blocking device is designed to release and block again, in a manner controlled by the activation of the electric motor (4), a rotational movement of the belt shaft (5) in the extension direction in a repeating sequence, wherein
- the first blocking device can be moved on the basis of an activation of the electric motor (4) from a position blocking the belt shaft (5) into a position releasing the belt shaft (5), and
- the first blocking device automatically blocks again according to a predetermined rotation angle of the belt shaft (5) as a result of the allowed rotational movement of the belt shaft (5) in the extension direction, wherein
- an unlocking ring (611) is provided, which is driven by the electric motor (4) and has a control contour (616), and
- the first blocking device is formed by at least one blocking element (613) that abuts the control contour (616).

2. Belt retractor according to claim 1, **characterized in that**
- the control contour (616) is formed by a ramp structure, which has a number of ramps (6161) corresponding to the number of blocking elements (613), and by recesses (6162) which are arranged between the ramps (6161) and which the blocking element (613) alternately abuts in the blocking position and the releasing position.

3. Belt retractor according to any of the preceding claims,
**characterized in that**
- a rotational direction reversing gear mechanism is provided, which is rotationally connected to the belt shaft (5) via a first part, and
- the first blocking device is arranged between the first part of the rotational direction reversing gear mechanism and a second part of the rotational direction reversing gear mechanism, which second part is driven by the rotational direction reversing gear mechanism into a rotational direction counter to the rotational direction of the belt shaft (5).

4. Belt retractor according to claim 3, **characterized in that**
- the second part performs, with respect to the first part, a rotational movement that is translated into a higher speed by the rotational direction reversing gear mechanism.

5. Belt retractor according to either claim 3 or 4, **characterized in that**
- the rotational direction reversing gear mechanism is formed by a planetary gear mechanism (62), **and in that**
- the reversal of the rotational direction in the rotational direction reversing gear mechanism is realized by a first planetary carrier (621) of the planetary gear mechanism (62), which planetary carrier is blocked by a second blocking device with respect to the frame (1) of the belt retractor.

6. Belt retractor according to claims 3 to 5, **characterized in that**
- the first part or the second part of the rotational direction reversing gear mechanism has a blocking contour, which the first blocking device abuts in the blocking position.

7. Belt retractor according to any of claims 3 to 6, **characterized in that**
- the first part is formed by a tubular, axial extension, which is connected to the belt shaft (5) in a rotationally fixed manner and forms the housing (60) of the rotational direction reversing gear mechanism.

8. Belt retractor according to claims 6 or 7 with reference back to claim 6, **characterized in that**
- the blocking contour is formed by ramps (604) which are oriented in the circumferential direction, are arranged on the inside of the annular extension, and which the blocking element (613) abuts in the blocking position.

9. Belt retractor according to either claim 1 or 2, or according to any of claims 3 to 8 with reference back to either claim 1 or 2, **characterized in that**
- the unlocking ring (611) is spring-loaded by a spring (615) with respect to the belt shaft (5).

10. Belt retractor according to claim 9, **characterized in that**
- the belt shaft (5) is spring-loaded in the winding-up direction of the seat belt by a power spring (91) which is fixedly supported on the frame, and
- the spring force of the power spring (91) is less than the spring force of the spring (615) which is loading the unlocking ring (611).

## Revendications

1. Enrouleur de ceinture comportant
- un arbre de ceinture (5) monté de manière à pouvoir tourner dans un cadre (1) et sur lequel une ceinture de sécurité peut être enroulée, et
- une unité de limitation de force (61) qui, lors d'une activation, permet un mouvement de rotation de l'arbre de ceinture (5) dans le sens d'extension de la ceinture de sécurité, **caractérisé en ce que**
- l'unité de limitation de force (61) présente un moteur électrique (4) et un premier dispositif de blocage, et
- le premier dispositif de blocage est conçu, lorsqu'il est commandé par l'activation du moteur électrique (4), pour libérer un mouvement de rotation de l'arbre de ceinture (5) dans le sens d'extension et pour le bloquer de nouveau dans une séquence répétitive, dans lequel
- le premier dispositif de blocage peut être déplacé, en fonction d'une activation du moteur électrique (4), d'une position de blocage de l'arbre de ceinture (5) vers une position de libération de l'arbre de ceinture (5), et
- le premier dispositif de blocage se bloque à nouveau automatiquement par le mouvement de rotation permis de l'arbre de ceinture (5) dans le sens d'extension selon un angle de rotation prédéterminé de l'arbre de ceinture (5), dans lequel
- une bague de déverrouillage (611) entraînée par le moteur électrique (4) est prévue, laquelle présente un contour de commande (616), et
- le premier dispositif de blocage est formé par au moins un élément de blocage (613) reposant contre le contour de commande (616).

2. Enrouleur de ceinture selon la revendication 1, **caractérisé en ce que**
- le contour de commande (616) est formé par une structure à rampes comportant un nombre de rampes (6161) correspondant au nombre d'éléments de blocage (613) et des renfoncements (6162) disposés entre les rampes (6161), contre lesquelles rampes et lesquels renfoncements l'élément de blocage (613) repose alternativement dans la position de blocage et dans la position de libération.

3. Enrouleur de ceinture selon l'une des revendications précédentes, **caractérisé en ce que**
- un engrenage d'inversion de sens de rotation est prévu, lequel est en liaison de rotation avec l'arbre de ceinture (5) par l'intermédiaire d'une première partie, et
- le premier dispositif de blocage est disposé entre la première partie de l'engrenage d'inversion de sens de rotation et une seconde partie de l'engrenage d'inversion de sens de rotation entraînée par l'engrenage d'inversion de sens de rotation dans un sens de rotation opposé au sens de rotation de l'arbre de ceinture (5).

4. Enrouleur de ceinture selon la revendication 3, **caractérisé en ce que**
- la seconde partie exécute, par rapport à la première partie, un mouvement de rotation traduit en une vitesse de rotation plus élevée par l'engrenage d'inversion de sens de rotation.

5. Enrouleur de ceinture selon l'une des revendications 3 ou 4,
**caractérisé en ce que**
- l'engrenage d'inversion de sens de rotation est formé par un engrenage planétaire (62), **et en ce que**
- l'inversion du sens de rotation dans l'engrenage d'inversion de sens de rotation est réalisée par un premier porte-satellites (621) de l'engrenage planétaire (62) bloqué par rapport au cadre (1) de l'enrouleur de ceinture par l'intermédiaire d'un second dispositif de blocage.

6. Enrouleur de ceinture selon les revendications 3 à 5, **caractérisé en ce que**
- la première partie ou la seconde partie de l'engrenage d'inversion de sens de rotation présente un contour de blocage contre lequel repose le premier dispositif de blocage dans la position de blocage.

7. Enrouleur de ceinture selon l'une des revendications 3 à 6,
**caractérisé en ce que**
- la première partie est formée par un prolongement axial tubulaire relié de manière solidaire en rotation à l'arbre de ceinture (5), lequel prolongement forme le boîtier (60) de l'engrenage d'inversion de sens de rotation.

8. Enrouleur de ceinture selon les revendications 6 ou 7 en relation avec la revendication 6, **caractérisé en ce que** -le contour de blocage est formé par des rampes (604) orientées dans la direction périphérique et disposées sur la face intérieure du prolongement annulaire, contre lesquelles rampes repose l'élément de blocage (613) dans la position de blocage.

9. Enrouleur de ceinture selon l'une des revendications 1 ou 2 ou selon l'une des revendications 3 à 8 en relation avec l'une des revendications 1 ou 2,
**caractérisé en ce que**
- la bague de déverrouillage (611) est sollicitée par ressort par rapport à l'arbre de ceinture (5) par l'intermédiaire d'un ressort (615).

10. Enrouleur de ceinture selon la revendication 9, **caractérisé en ce que**
- l'arbre de ceinture (5) est sollicité par ressort dans le sens d'enroulement de la ceinture de sécurité par un ressort moteur (91) s'appuyant de manière fixe sur le cadre, et
- la force de ressort du ressort moteur (91) est inférieure à la force de ressort du ressort (615) sollicitant la bague de déverrouillage (611).
